# EUROPEAN PATENT APPLICATION

(11) **EP 4 617 876 A1**
(43) Date of publication of application: **17.09.2025**
(21) Application number: 25163915.9
(22) Date of filing: 14.03.2025
(51) Int. Cl.: G06F 9/50

(54) **ZERO-CODE ADMINISTRATION OF DATA MANAGEMENT FOR CONTAINERIZED WORKLOADS**

(30) Priority: 15.03.2024 US 202463566128 P; 15.03.2024 US 202463566114 P; 29.08.2024 US 202418819997
(71) Applicant: Nutanix, Inc., San Jose, California 95110 (US)
(72) Inventor: Narayanasamy, Prakash, San Jose, 95110 (US); Mathur, Subodh Kumar, San Jose, 95110 (US); Koehler, Heiko, San Jose, 95110 (US)
(74) Representative: Keller Schneider Patentanwaltsgesellschaft mbH

(57) **Abstract**

Methods, systems, and computer program products for self-service, zero-code administration of data management activities arising from containerized workloads. A Kubernetes cluster deployment module is configured to synthesize operations that are intended to achieve a desired state of data management functions. The intention is provided by a self-service user using declarative, no-code specifications. Based on the declarative, no-code specifications, a cluster creation module implements operations to create or configure a Kubernetes cluster. The configured Kubernetes cluster is configured with sufficient resources to be able to initially implement the desired state of the data management functions and to maintain the desired state of the data management functions under changing conditions. As applicable, the storage infrastructure on which the Kubernetes cluster is implemented is continually instructed to maintain the desired state of the data management functions. The storage infrastructure can be implemented as an HCI cluster or as some other storage infrastructure.

## Description

### TECHNICAL FIELD

This disclosure relates to containerized applications, and more particularly to techniques pertaining to zero-code administration of data management for containerized workloads.

### BACKGROUND

Historically, administration of data protection applications such as backup/restore applications, disaster recovery configurations and applications, and so on have long relied on specially trained information technology (IT) personnel. While in such historical times it has been *de facto* acceptable to have to engage and rely on IT personnel, the responsibility of such data protection application administration has shifted to others who may not have specific IT training. This has introduced a challenge for ongoing administration of data protection, especially since interacting with computing infrastructure at higher levels of abstraction has become more prevalent. This has been a boon to enterprise-level computing infrastructure users as well as "Mom and Pop" shops. It is now possible for a person who is not necessarily skilled in information technology and/or not necessarily skilled in coding of script and other machine languages to be able to express data protection needs at a higher level of abstraction. For example, a modern backup and restore application might merely ask the owner/installer to identify a storage volume to be backed up. Even with just that high-level expression of his/her data protection needs, such a modern backup and restore application can automatically begin taking backup snapshots and can automatically be configured to be perpetually ready for responding to the owner/installers needs to restore specified bits of data.

The foregoing is an example that corresponds to a "Mom and Pop" shop. Data protection needs at the enterprise level are often quite a bit more sophisticated, involving aspects of disaster recovery, availability zones, some demanded recovery time objective, some demanded recovery point objective, and so on. Even with this additional enterprise level sophistication, it is reasonable to want a non-IT person to be able to manage enterprise data however, so far, automatic implementation of this enterprise level sophistication has eluded the data management application development community.

At the same time that enterprise-level needs for data management applications-and in some cases very sophisticated needs-has increased, containerized computing has undergone rapid adoption. Containers, self-contained executable units, encapsulate all the necessary code resources to initiate execution on a particular infrastructure. Beyond just applications, containers can include operating system components (often referred to as dependencies) and drivers required for running on specific infrastructure.

This paradigm surrounding self-contained executable units greatly benefits computing infrastructure managers. Within this paradigm, infrastructure managers can deploy a computing system with a selected host operating system (e.g., Linux) and subsequently launch multiple executable containers-each potentially native to different guest operating systems. The key advantage lies in the OS-agnostic nature of containers. Infrastructure managers no longer need to worry about porting applications to specific operating systems; instead, they can leverage the flexibility offered by these self-contained executable units.

As container adoption has surged, needs for handling containers using higher-level constructs have also emerged. In fact, many interconnected containerized applications, such as are found in Kubernetes clusters and/or in Kubernetes pods, form the building blocks of larger applications (that are composed of many interconnected containerized applications). Administrators can configure these interconnected components through user-friendly interfaces such as a Kubernetes dashboard. Furthermore, the concept of a Kubernetes cluster provides a cohesive framework for managing and orchestrating these containerized workloads such that today's Kubernetes cluster dashboards and other administrator-directed management tools empower administrators to efficiently deploy, monitor, and scale containerized applications, thus fostering agility and flexibility in modern computing environments.

These days, the scope and sophistication of applications that are to be managed by administrators (e.g., Docker- and Kubernetes-based deployments) have exploded to the point that it is no longer feasible for non-IT personnel to manage such sophisticated deployments manually.

Unfortunately, the aforementioned explosion of scope and sophistication of the applications has gone well beyond a mere burden on the administrator. Rather, it has become utterly untenable to expect a non-IT staff person to deal with this surge in scope and sophistication of these applications. Further, it has become utterly untenable to expect a non-IT staff person to deal with sophisticated and complicated deployments. What is needed is computerized automation to reduce or eliminate the burden on non-IT staff personnel who are tasked with initial deployment and ongoing management of highly sophisticated and complicated data management applications.

The problem to be solved is therefore rooted in various technological limitations of legacy approaches. Improved technologies are needed. In particular, improved applications of technologies are needed to address the aforementioned technological limitations of legacy approaches.

### SUMMARY

This summary is provided to introduce a selection of concepts that are further described elsewhere in the written description and in the figures. This summary is not intended to identify key features or essential features of the claimed subject matter, nor is it intended to limit the scope of the claimed subject matter. Moreover, the individual embodiments of this disclosure each have several innovative aspects, no single one of which is solely responsible for any particular desirable attribute or end result.

The present disclosure describes techniques used in systems, methods, and computer program products pertaining to zero-code administration of data management for containerized workloads, which techniques advance the relevant technologies to address technological issues with legacy approaches. More specifically, the present disclosure describes techniques used in systems, methods, and in computer program products pertaining to zero-code administration of data management for containerized workloads. Certain embodiments are directed to technological solutions pertaining to the entire lifecycle (e.g., from initial setup to ongoing governance and observability) of data management applications that are implemented as containerized workloads.

Any combination of any of the aforementioned techniques can be organized to perform any variation of acts pertaining to zero-code administration of data management for containerized workloads, and many such combinations of aspects of the above elements are contemplated. The disclosed techniques improve upon legacy approaches. In particular, some of the herein-disclosed techniques provide technical solutions that address the technical problems attendant to formation clusters of containerized applications. Also, some of the herein-disclosed techniques provide technical solutions that address the technical problems attendant to ongoing administration of said clusters of containerized applications.

Certain of such technical solutions involve specific implementations (e.g., data organization, data communication paths, module-to-module interrelationships, etc.) that relate to the software arts for improving computer functionality. Various applications of the herein-disclosed improvements in computer functionality serve to reduce demand for computer memory, reduce demand for computer processing power, reduce network bandwidth usage, and reduce demand for intercomponent communication. Strictly as one case, the inter-component communication protocols as disclosed herein as well as the herein-disclosed use models serve to reduce both memory usage and CPU cycles as compared to alternative approaches. Moreover, information that is received during operation of the embodiments is transformed by the processes that store data into and retrieve data from the aforementioned data structures.

The ordered combination of steps of the embodiments serve in the context of practical applications that perform steps for zero-code formation of clusters with zero-code ongoing administration. As such, the herein-disclosed techniques for zero-code formation of clusters as well as zero-code ongoing administration techniques overcome long-standing yet heretofore unsolved technological problems associated with formation and ongoing administration of clusters of containerized applications that arise in the realm of computer systems.

Many of the herein-disclosed embodiments for zero-code formation of clusters with zero-code ongoing administration are technological solutions pertaining to technological problems that arise in the hardware and software arts that underlie Kubernetes cluster deployment. Aspects of the present disclosure achieve performance and other improvements in peripheral technical fields including, but not limited to, high performance computing and computing cluster management.

Some embodiments include a sequence of instructions that are stored on a non-transitory computer readable medium. Such a sequence of instructions, when stored in memory and executed by one or more processors, causes the one or more processors to perform a set of acts for zero-code formation of clusters with zero-code ongoing administration.

Some embodiments include the aforementioned sequence of instructions that are stored in a memory, which memory is interfaced to one or more processors such that the one or more processors can execute the sequence of instructions to cause the one or more processors to implement acts for zero-code formation of clusters with zero-code ongoing administration.

Certain embodiments are implemented A non-transitory computer readable medium having stored thereon a sequence of instructions which, when stored in memory and executed by a processor cause the processor to perform acts comprising: invoking a Kubernetes cluster deployment module configured to synthesize one or more operations to achieve a declarative no-code configuration of a desired state of a data management function; invoking a cluster creation module that implements the one or more operations to create or configure a Kubernetes cluster corresponding to the declarative no-code configuration of the desired state of the data management function; invoking a management module that implements at least some aspects of governance and observability over the Kubernetes cluster so that the desired state of the data management function is maintained over time or changing conditions; and configuring a storage infrastructure on which the Kubernetes cluster is implemented, wherein the storage infrastructure is instructed to implement the desired state of the data management function.

Some embodiments further comprise instructions which, when stored in memory and executed by the processor cause the processor to perform acts for carrying out a matching operation that matches resource demands to one or more pools of resources.

Some embodiments further comprise instructions which, when stored in memory and executed by the processor cause the processor to perform acts for carrying out optimizing operations by receiving feasible solutions from a matching operation and outputting at least one optimized solution based at least in part on one or more constraints.

Some embodiments further comprise instructions which, when stored in memory and executed by the processor cause the processor to perform acts for carrying out an infrastructure discovery operation that processes a data management scenario to produce one or more resource pools.

Some embodiments further comprise instructions which, when stored in memory and executed by the processor cause the processor to perform acts for carrying out onboarding operations by receiving an optimized solution and invoking at least one of, executable agent code, or one or more further onboarding operations.

Some embodiments further comprise instructions which, when stored in memory and executed by the processor cause the processor to perform acts for carrying out a policy execution observation operation that interacts with a Kubernetes cluster during execution of the data management function.

Some embodiments further comprise instructions which, when stored in memory and executed by the processor cause the processor to perform acts for carrying out a policy synthesis operation that receives a codification of data protection needs and produces a specification or rule that corresponds to a desired behavior of the data management function.

Some embodiments further comprise instructions which, when stored in memory and executed by the processor cause the processor to perform acts of configuring at least a portion of the storage infrastructure is part of an HCI deployment.

Some embodiments further comprise instructions which, when stored in memory and executed by the processor cause the processor to perform acts of configuring at least a portion of the storage infrastructure is part of a of a Kubernetes cluster deployment.

Further details of aspects, objectives and advantages of the technological embodiments are described herein in the figures and claims.

### BRIEF DESCRIPTION OF THE DRAWINGS

The drawings described below are for illustration purposes only. The drawings are not intended to limit the scope of the present disclosure.

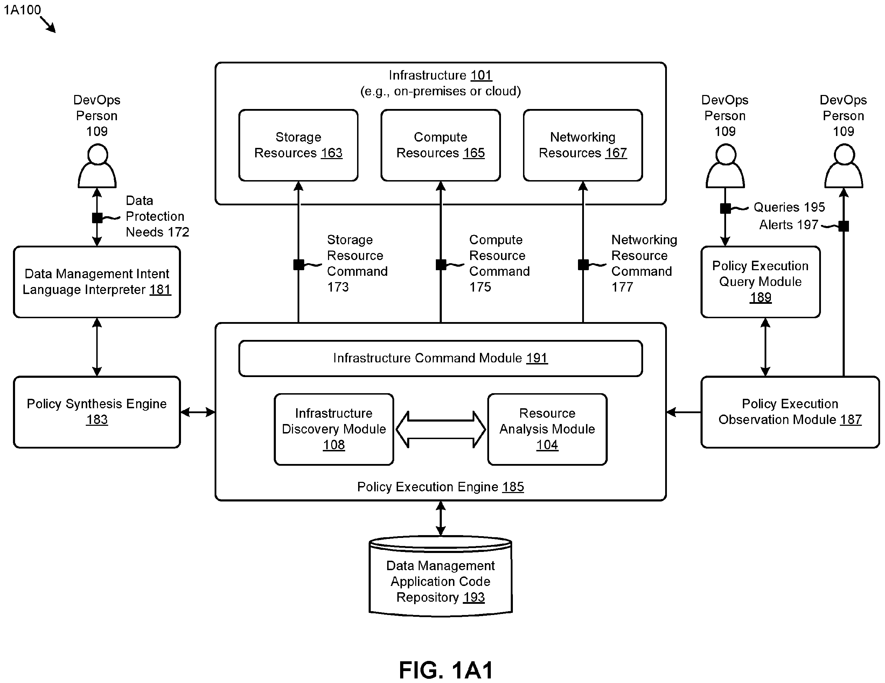

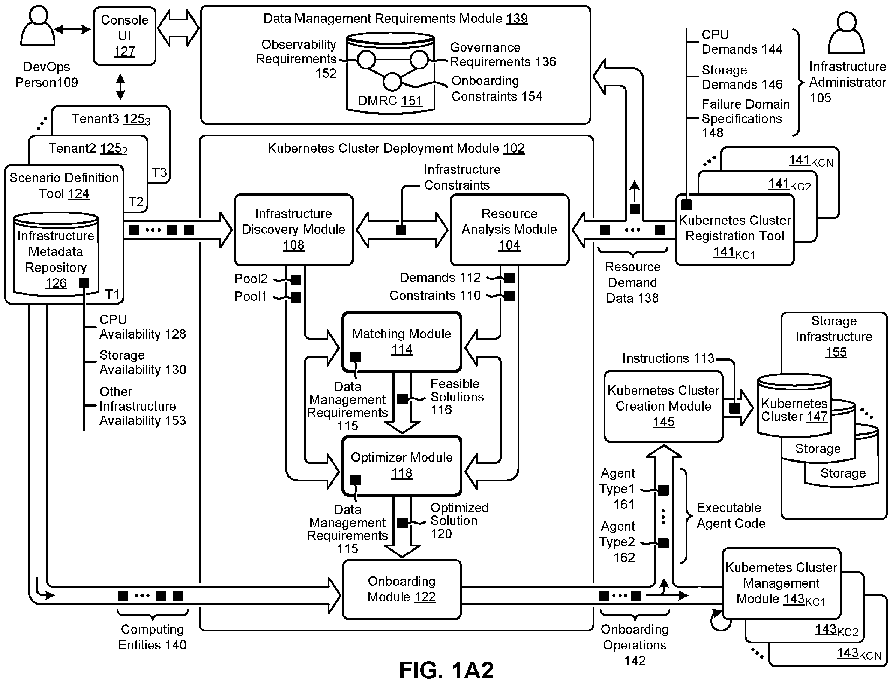

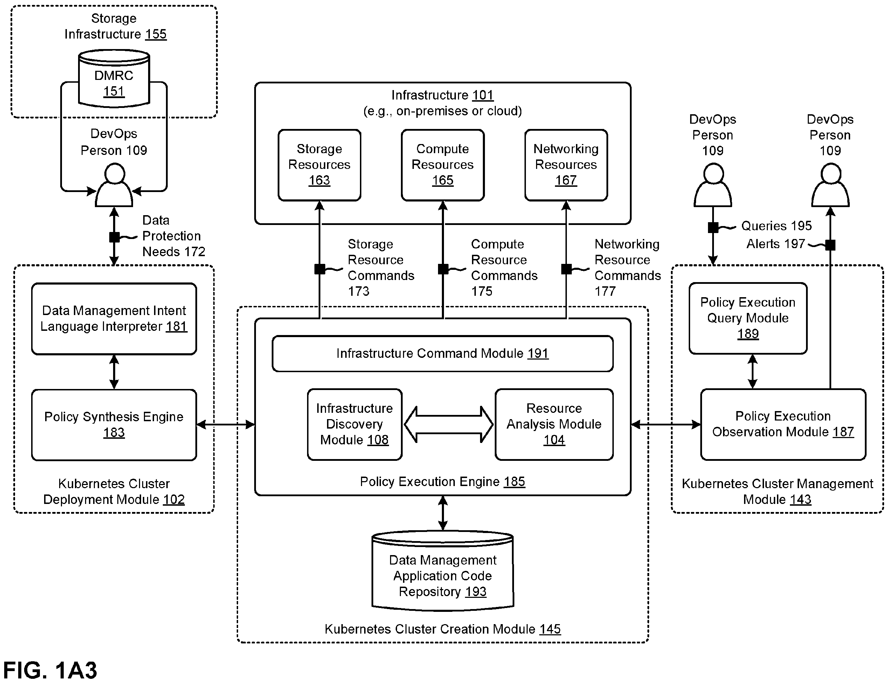

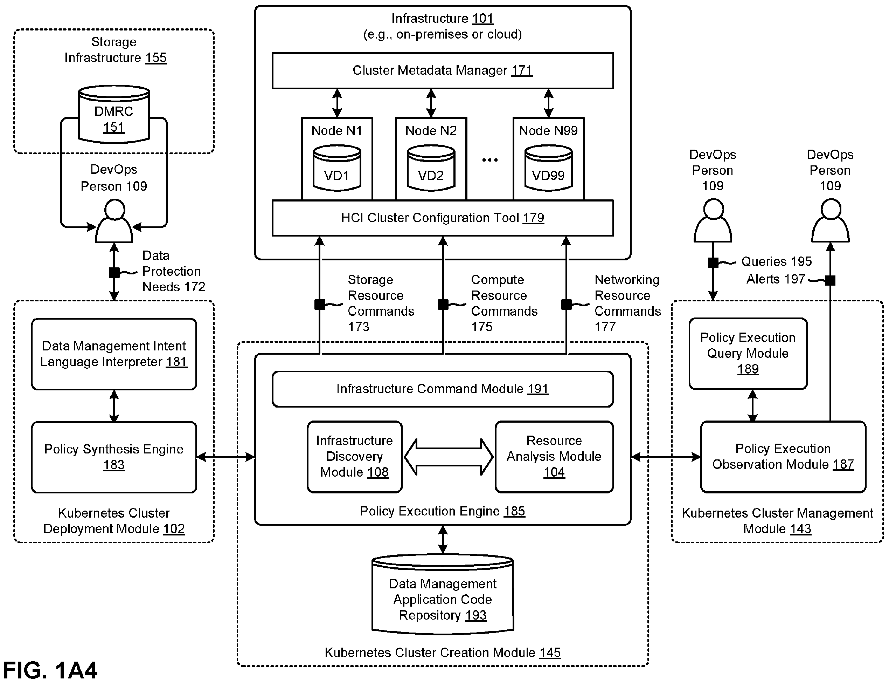

**FIG. 1A1** is a block diagram of a first example system that implements zero-code administration of data management for containerized workloads, according to various embodiments.
**FIG. 1A2** exemplifies a second example system that implements zero-code administration of data management for containerized workloads, according to an embodiment.
**FIG. 1A3** shows an example partitioning that maps the functions of the operational modules of a second example system onto the block diagram of the first example system, according to an embodiment.
**FIG. 1A4** shows an example partitioning that maps the functions of the operational modules onto a hyperconverged computing infrastructure (HCI) configuration, according to an embodiment.

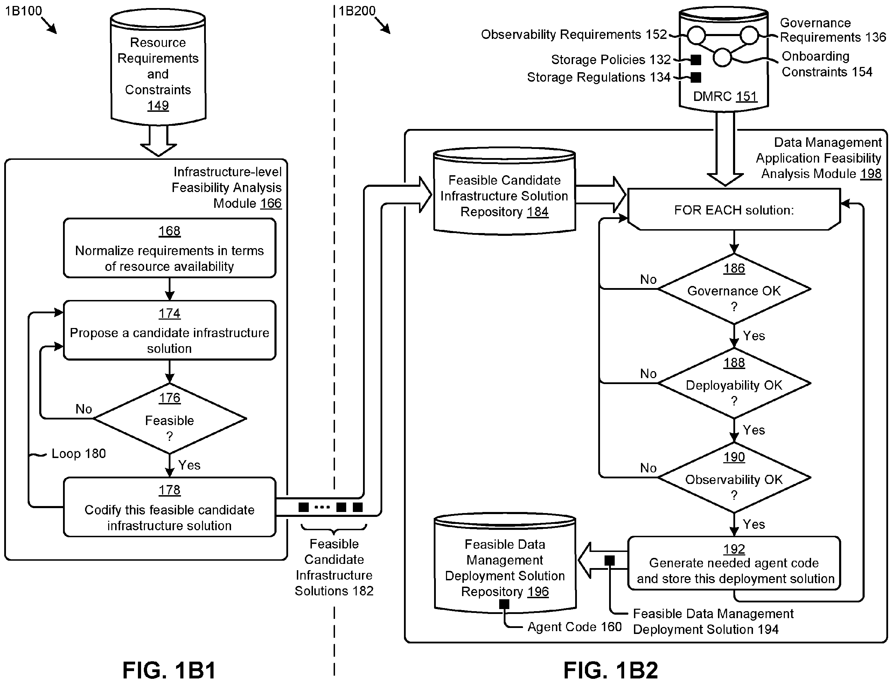

**FIG. 1B1** presents a system that performs infrastructure-level cluster feasibility analysis, according to an embodiment.
**FIG. 1B2** presents a system that performs application-level cluster feasibility analysis, according to an embodiment.

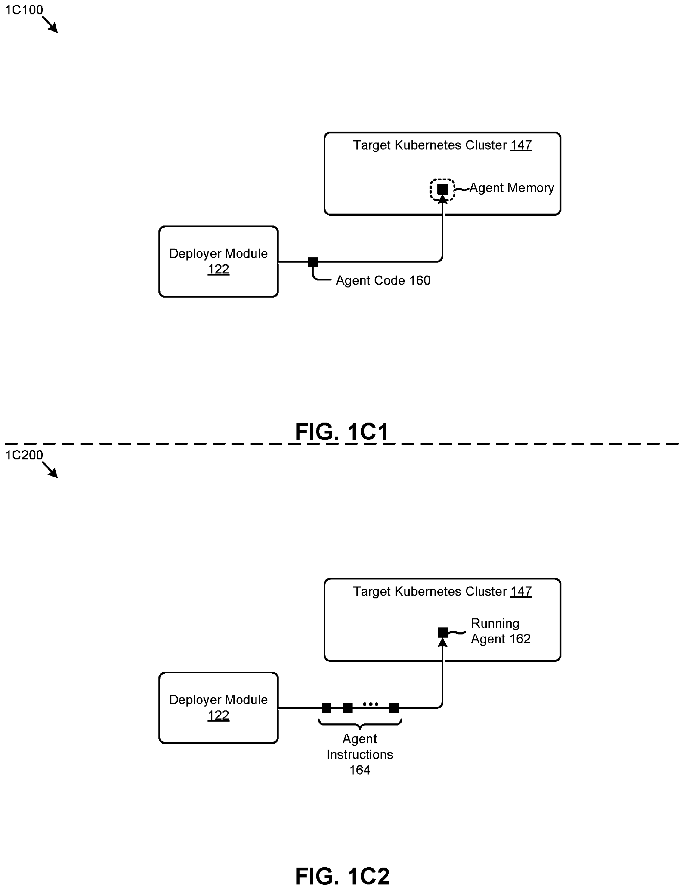

**FIG. 1C1** shows an agent-enabled cluster bring-up technique that is used in systems that implement zero-code administration of data management for containerized workloads, according to an embodiment.
**FIG. 1C2** shows an agent-enabled cluster maintenance technique that is used in systems that implement zero-code administration of data management for containerized workloads, according to an embodiment.
**FIG. 2A** shows a technique to implement zero-code administration of data management for stateful containerized workloads.
**FIG. 2B** shows various deployment scenario setup considerations that are profiled for use in systems that implement zero-code administration of data management for containerized workloads, according to an embodiment.
**FIG. 2C** shows an example bring-up method as used in systems that implement zero-code administration of data management for containerized workloads, according to an embodiment.
**FIG. 3A** shows various Kubernetes cluster resource pool definition techniques as used in systems that implement zero-code administration of data management for containerized workloads, according to an embodiment.
**FIG. 3B** shows an automated dictionary-based translation facility as used in systems that implement zero-code administration of data management for containerized workloads, according to an embodiment.
**FIG. 3C** shows a dictionary-enabled representation-agnostic term generation facility as used in systems that implement zero-code administration of data management for containerized workloads, according to an embodiment.
**FIG. 4A** is a self-service user interface for defining high-level data management scenarios through use of a graphical user interface, according to an embodiment.
**FIG. 4B** depicts a user interface for collecting the data management needs of an application, according to an embodiment.
**FIG. 5A****,** **FIG. 5B****,** **FIG. 5C****,** and **FIG. 5D** depict virtualization system architectures comprising collections of interconnected components suitable for implementing embodiments of the present disclosure and/or for use in the herein-described environments.

### DETAILED DESCRIPTION

Aspects of the present disclosure solve problems associated with using computer systems for formation and ongoing administration of clusters of containerized applications. These problems are unique to, and may have been created by, various computer-implemented methods for formation and ongoing administration of clusters of containerized applications into Kubernetes clusters. Some embodiments are directed to approaches for zero-code formation of clusters with zero-code ongoing administration. The accompanying figures and discussions herein present example environments, systems, methods, and computer program products pertaining to zero-code administration of data management for containerized workloads.

### OVERVIEW

The scope and sophistication of today's data management demands domain-specific knowledge that spans both application-level domain expertise as well as traditional information technology (IT) expertise. Unfortunately, this causes an enterprise to have to find staff that has skills in both domains. Often it is not possible for an enterprise to locate such a skill-imbued human resource and as such, the knowledge and skill gap needs to be filled using technology. One possible approach is to provide an application manager (e.g., a DevOps person) with the capability to manage at the application level without requiring that same DevOps person to be an infrastructure expert. Even if the DevOps person is not required to be an infrastructure *expert,* and even if a popular infrastructure configuration such as Kubernetes is selected, the specific knowledge that intersects application-level expertise with infrastructure configuration expertise is still extensive. What is needed is an automated way for a DevOps person to work at a high level of abstraction (e.g., at the "needs", or "requirements" level or "intent" level) and in such a manner that low-level implementation details are taken care of automatically. As used herein, the aforementioned high level of abstraction refers to expressed intents that comprise high level descriptions of a desired configuration for the computing cluster, which expressed intents are converted into detailed implementation and/or bring-up commands such as API calls, etc.

To address this need for the DevOps person to be effective as relates to data management functioning of an application, yet without demanding that the DevOps person be familiar with low-level operation of computing infrastructure, what is herein-disclosed are various configurations of container orchestration platforms for automating deployment, scaling, and management of containerized apps into a Kubernetes (or alternative) container-based clustering platform. It should be noted that the application programming interfaces (APIs) of legacy container orchestration platforms do not provide sufficient information pertaining to the computing infrastructure that underlies any particular Kubernetes cluster, so there needs to be some mechanism in place to gather such needed information and act on it in an automated fashion, yet without requiring code to do so.

Techniques disclosed herein create and deploy specially-configured Kubernetes clusters and, on an ongoing basis, observe and advise on changing states of the resources that are used in the created/deployed Kubernetes clusters. The agents are defined to be able to move information received from the Kubernetes cluster deployment module into the resources that are used in the created Kubernetes clusters. For example, if a 200GB storage partition is needed/used in the created Kubernetes clusters, an agent can be situated as an executable unit within the created Kubernetes clusters, and therefrom manage storage resources of the created Kubernetes clusters.

Such agents comprehend resource "tags" and are able to receive and execute commands that are specific to a particular grouping of resources. Moreover, such agents are able to deal with Kubernetes cluster resources with respect to any policies or requirements that might have been codified by or within a Kubernetes cluster deployment module. For example, some resources might have specific observability capabilities that are specific to the resource type. Additionally or alternatively, some resources might have specific governance requirements that are specific to the resource type. In some cases, an agent merely gathers, observes, and reports information from the infrastructure that underlies the Kubernetes cluster. In some cases, an agent is able to configure the infrastructure that underlies the Kubernetes cluster.

The herein disclosed techniques provide IT administrators the ability to view and govern the usage of the infrastructure resources (e.g., compute resources, storage resources, network resources, etc.) as consumed by a Kubernetes (or alternative) cluster-including resources that are provided by or running on virtualization system infrastructure. As is known in the art, a Kubernetes (or alternative) cluster can derive from any distribution created for a particular infrastructure configuration, and/or a Kubernetes (or alternative) cluster can be created to comport with a particular set of infrastructure constraints. As such, the disclosed techniques are not necessarily specific to or restricted to any particular distribution nor restricted to any particular underlying infrastructure. The ability to view and govern the usage of the infrastructure resources consumed by a Kubernetes cluster is particularly useful in the context of embodiments that operate entirely in the Kubernetes (or alternative) space with little to no built-in visibility to the infrastructure layer. By providing the needed visibility (e.g., in accordance with the herein-disclosed executable agent code and corresponding deployment techniques), IT administrators can now reason about the resources used by Kubernetes (or alternative) clusters. In particular, IT administrators can now reason with respect to storage needs pertaining to replication and other data management applications.

### Example Use Case

An example operation flow used for establishing a data management application to run within a given computing infrastructure are described in Table 1.

**Table 1: Stepwise operation flow**

| **Step** | **Description** |
|---|---|
| 1 | Create an entity to represent a Kubernetes cluster in a cluster controller. |
| 2 | View the resources consumed by a Kubernetes cluster. |
| 3 | Provide a mechanism to apply and govern computing and other quotas using high-order scope definitions and/or high order declarations. |
| 4 | Provide workflows to register aspects of the cluster and pre-configure the registered cluster to support onboarding of configurations. |

### Definitions and Use of Figures

Some of the terms used in this description are defined below for easy reference. The presented terms and their respective definitions are not rigidly restricted to these definitions-a term may be further defined by the term's use within this disclosure. The term "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application and the appended claims, the term "or" is intended to mean an inclusive "or" rather than an exclusive "or". That is, unless specified otherwise, or is clear from the context, "X employs A or B" is intended to mean any of the natural inclusive permutations. That is, if X employs A, X employs B, or X employs both A and B, then "X employs A or B" is satisfied under any of the foregoing instances. As used herein, at least one of A or B means at least one of A, or at least one of B, or at least one of both A and B. In other words, this phrase is disjunctive. The articles "a" and "an" as used in this application and the appended claims should generally be construed to mean "one or more" unless specified otherwise or is clear from the context to be directed to a singular form.

Various embodiments are described herein with reference to the figures. It should be noted that the figures are not necessarily drawn to scale, and that elements of similar structures or functions are sometimes represented by like reference characters throughout the figures. It should also be noted that the figures are only intended to facilitate the description of the disclosed embodiments-they are not representative of an exhaustive treatment of all possible embodiments, and they are not intended to impute any limitation as to the scope of the claims. In addition, an illustrated embodiment need not portray all aspects or advantages of usage in any particular environment.

An aspect or an advantage described in conjunction with a particular embodiment is not necessarily limited to that embodiment and can be practiced in any other embodiment even if not so illustrated. References throughout this specification to "some embodiments" or "other embodiments" refer to a particular feature, structure, material, or characteristic described in connection with the embodiments as being included in at least one embodiment. Thus, the appearance of the phrases "in some embodiments" or "in other embodiments" in various places throughout this specification are not necessarily referring to the same embodiment or embodiments. The disclosed embodiments are not intended to be limiting of the claims.

### DESCRIPTIONS OF EXAMPLE EMBODIMENTS

**FIG. 1A1** is a block diagram of a first example system that implements zero-code administration of data management for containerized workloads. As an option, one or more variations of system 1A100 or any aspect thereof may be implemented in the context of the architecture and functionality of the embodiments described herein and/or in any environment.

The figure is being presented to show that data protection needs as expressed by a non-IT person (e.g., the shown DevOps person 109) can be mapped automatically onto available computing infrastructure (e.g., the shown infrastructure 101. Further, the figure is being presented to show how a non-IT person can administrate an automatically-generated data management application on an ongoing basis.

As shown, a DevOps person expresses (e.g., through a user interface) a variety of data protection needs 172 in a manner such that a data management intent language interpreter 181 and/or the policy synthesis engine 183 to be able to take in the expressed data protection intents and synthesize those needs and intents into a data management policy. For example, the DevOps person who is not necessarily skilled in information technology can express data protection needs at a high level of abstraction such as "Even after a disaster, I need to be able to restore my data to be the same as it was one hour before the disaster", and then rely in the a data management intent language interpreter 181 and/or the policy synthesis engine 183 to be able to configure a corresponding data management function (e.g., the function of a data management application or the function of a portion of a data management application).

As used herein, the term "data management application" and the term "data management function" are used interchangeably with the understanding that a data management application can implement a single data management function, or can implement a series of data management functions. Moreover, a single data management function can be, and indeed might need to be, implemented across multiple data management applications that interoperate between themselves to carry out the data management function or functions.

As used herein, data protection needs are expressions of desired behavior of a collection of Kubernetes pods that run in a container orchestration environment.

Referring again to FIG. 1A1, this example embodiment situates the data management intent language interpreter 181 to receive data protection needs 172 from a DevOps person, and juxtaposes said data management intent language interpreter 181 as a front-end to policy synthesis engine 183. In some cases, the policy synthesis engine 183 outputs intents that are expressed at a level that can be acted upon by infrastructure command module 191 or its agents. More particularly, infrastructure command module 191 and/or its agents are configured to cause the shown storage resources 163, compute resources 165 and networking resources 167 to reach a state that corresponds to the expressed intents.

Further details regarding general approaches to processing intents are described in U.S. Patent No. 11,900,172.

As used herein, a data management policy is a specification or rule that corresponds to a desired behavior of an automatically-deployed data management application. Strictly as an example, a data management policy might specify or refer to a data replication factor, and/or a restore point requirement, and/or a recovery latency requirement, and/or a snapshot periodicity, etc.

Now, what is needed in order to automatically generate a data management application and deploy it onto some particular infrastructure is a mechanism to discover and analyze resources of the infrastructure such that the necessary infrastructure resources (e.g., storage resources 163, compute resources 165, and networking resources 167) can be allocated for the purpose of implementing the aforementioned data management application. The shown policy execution engine 185 includes infrastructure discovery module 108, resource analysis module 104, and infrastructure command module 191. These three modules interoperate in a manner such that the specifically determined resources can be designated for use by the automatically-generated data management application. In the particular embodiment of FIG. 1A1, the policy execution engine is able to access the data management application code repository 193, select various constituents (e.g., code and metadata) based on the foregoing analysis, and then to emit commands to, or pertaining to, the various resources (e.g., storage resource commands 173, compute resource commands 175, and or networking resource commands 177), which resource commands are consumed by modules within infrastructure 101.

It should be noted that infrastructure 101 can be any computing infrastructure, whether it is located and operated in an on-premises manner, and/or whether it is located and operated as a private cloud, and/or whether it is located and operated on a public cloud. Furthermore, infrastructure 101 might be configured as a virtualization system, or as a container orchestration system (COS), or both. In fact, some public cloud computing vendors support virtualization system components (e.g., hypervisors, virtual machines, other virtualized entities, etc.) that can be deployed and can run concurrently with container orchestration system components (e.g., executable containers, other containerized entities). The interoperating constituent modules of policy execution engine 185 are configured to draw code and metadata from data management application code repository 193 so as to assemble a data management application that satisfies the DevOps person's data protection needs.

It often happens that at some moment in time after a data management application that satisfies the DevOps person's data protection needs has been deployed, there may be changes to such needs. Accordingly, system 1A100 includes a mechanism for ongoing observation and. Specifically, and as shown, any one or more DevOps persons can receive alerts 197 that derived from ongoing observations made of or by the data management application that is running on infrastructure 101. A DevOps person is provided a user interface so as to facilitate user interaction such as to make queries 195 into the data management application and/or its agents. The shown policy execution query module 189 and the shown policy execution observation module 187 facilitates such user interaction.

As used herein, a DevOps person refers to a human who is tasked with management of some aspect of an application. A DevOps person need not be technically proficient with computer code (though might be), and as such, a DevOps person avails of cluster management tools such as no-code declarations, no-code data management application requirements, no-code configuration requirements, etc.

In contrast, and as used herein, an infrastructure administrator refers to a human who is tasked with management of the computing infrastructure that underlies a computing workload. An infrastructure administrator is often technically proficient with computer code and, as such, is able to avail of any known techniques (e.g., command line interfaces, scripts, mashups, system calls, etc.) to define and manage a computing cluster. Still further, it should be noted that certain infrastructure administrators are particularly proficient with hyperconverged computing infrastructures (HCIs), whereas other infrastructure administrators are particularly proficient with containerized orchestration systems (COSs).

System 1A100 exemplifies one particular architecture where specifically-configured modules interoperate so as to achieve deployment of a data management capability (e.g., data backup, data recovery, etc.) onto an arbitrary infrastructure. Although infrastructure 101 can be of any sort such as mentioned above, one embodiment involves executable containers. To exemplify and explain in detail, one possible implementation of system 1A100 involving executable containers in a containerized orchestration system, in particular, a Kubernetes containerized orchestration system is shown and described as pertains to FIG. 1A2.

**FIG. 1A2** exemplifies a second example system that implements zero-code administration of data management for containerized workloads. As an option, one or more variations of the second example system or any aspect thereof may be implemented in the context of the architecture and functionality of the embodiments described herein and/or in any environment.

In contrast to the embodiments of the foregoing figure, the embodiment of FIG. 1A2 shows many details pertaining to a system that combines inputs from a DevOps person with inputs from an infrastructure administrator 105. The infrastructure administrator can use any known technique to specify resource-demanding characteristics (e.g., CPU demands 144, storage demands 146, failure domain specifications 148, etc.) pertaining to a Kubernetes cluster. Contemporaneously, a DevOps person 109 can interface with console UI 127, which in turn may interface with a scenario definition tool 124. The scenario definition tool in turn may have access to and/or may populate the contents of infrastructure metadata repository 126. By this mechanism, a significant amount of information about a particular subject infrastructure can be known, and then used for deploying a Kubernetes cluster that implements a desired data management application. One of skill in the art will recognize that such a desired data management application needs some bounds that comport with the availability of resources (e.g., CPU availability 128, storage availability 130, other infrastructure availability 153), while at the same time comporting with any number of data management requirements and constraints (DMRCs), such as is shown by DMRC 151.

As used herein, data management requirements and constraints (DMRCs) are aspects of a computing infrastructure that relate to resilience (e.g., restorability) of volatile or non-volatile storage. In some cases, DMRCs refer to aspects of establishing and maintaining a containerized application. Strictly as examples, data management requirements and constraints may include observability requirements 152, governance requirements 136, onboarding constraints 154, and possibly other data management requirements and constraints that correspond to a given scenario.

Now referring again to scenario definition tool 124, the scope of resources considered by such a scenario definition tool may be purposely limited to tenant partitions (e.g., tenant T2 partition 125₂, tenant T3 partition 125₃ etc.). As such, availability of resources (e.g., CPU availability 128, storage availability 130, other infrastructure availability 153) may be specific to a particular tenant. In the example shown here in FIG. 1A2, managing the availability of resources for tenant T1 is handled separately from management of the availability of resources for tenant T2, which again is handled separately from management of the availability of resources for tenant T3, and so on. Accordingly, infrastructure discovery module 108 is configurable to observe such partitioning. As such, infrastructure discovery module 108 is able to emit definitions of pools of computer resources (e.g., pool1, pool2) that are tenant-specific. Similarly, since the shown scenario definition tool is tenant-specific, then it follows that the outputs from the scenario definition tool are also tenant-specific. In this example, executable computing agents and computer data (e.g., computing entities 140) are designed to comport with tenant-specific constraints.

The scenario definition tool is able to operate at a high level of semantics. For example, a scenario might be codified based on high-level semantics such as "Manage collection of snapshots such that recovery time in event of a failure is less than 5 minutes" or "Manage distribution of snapshots such that a recovery point objective can be met even if two availability zones (AZs) go down."

With such a facility, it can be easily seen how a DevOps person can serve as a data management application administrator by interacting with a console UI 127. In some cases, a DevOps person can serve as a data management application administrator possibly in conjunction with assistance and/or permission from infrastructure administrator. To this end, the figure shows DevOps person 109, who is able to interact with the shown data management requirements module 139 and/or to interact with (possibly tenant-specific) instances of scenario definition tool 124. The data management requirements module includes a certain amount of data storage (e.g., DMRC 151 on storage infrastructure 155) for parameters that are used in the creation of, and ongoing management of, a Kubernetes cluster. Specifically, and as shown, the data storage includes observability requirements 152, governance requirements 136, and onboarding constraints 154. These data management requirements and constraints serve as primary inputs to the shown Kubernetes cluster deployment module 102.

As shown, the role of the Kubernetes cluster deployment module includes matching available infrastructure to a set of Kubernetes cluster demands. More specifically, and as shown, details of an existing infrastructure can be used when registering a Kubernetes cluster. In some cases, the particular infrastructure availability (possibly tenant-specific infrastructure) may be subject to only those infrastructure items that are included under a particular tenant's partition. Now, given some particular infrastructure availability, the infrastructure discovery module 108 will seek to amalgamate all infrastructure availability under a tenant. In some cases, there may be multiple pools of resources, and in some cases each pool corresponds to a particular tenant. Concurrent with operations of the infrastructure discovery module, a resource analysis module 104 interacts with a Kubernetes (K8) or other containerized system administrator (e.g., infrastructure administrator 105) via a particular one of the shown Kubernetes cluster registration tools (e.g., Kubernetes cluster registration tool 141_{KC1}, Kubernetes cluster registration tool 141_{KC2}, ..., Kubernetes cluster registration tool 141_{KCN}). There might be many Kubernetes cluster registration tools that are distributed across many nodes of a particular infrastructure. As such, a particular Kubernetes cluster registration tool instance that is situated on a subject node can be used to register a Kubernetes cluster on or for that subject node.

The K8 administrator is able to specify particular needs/requirements (e.g., CPU demands 144, storage demands 146, failure domain specifications 148, etc.) for a particular Kubernetes cluster. This is shown as resource demand data 138 that is defined by the K8 administrator using the Kubernetes cluster registration tool. Such resource demand data 138 is provided to the resource analysis module. In some cases, resource demands are processed with respect to any requirements and constraints that are available from the shown data management requirements module 139. As such, and as shown, matching module 114 is able to match demands 112 and constraints 110 to corresponding pools of infrastructure. In some cases, there are data management requirements 115 that must be first satisfied (or planned for) in order for the matching module 114 to generate one or more feasible solutions 116.

A set of feasible solutions are provided to optimizer module 118 and the optimizer module is able to output what it deems to be an optimized solution 120. In this embodiment, an optimized solution 120 might mean any feasible solution that satisfies the foregoing data management requirements. Now, it should be noted that optimized solution 120 might be merely a set of parameters that would define a Kubernetes cluster. The set of parameters that define a Kubernetes cluster is provided to onboarding module 122. The onboarding module serves to process the foregoing set of parameters that would define a Kubernetes cluster into onboarding operations 142 that are interpreted and/or carried out by the shown Kubernetes cluster creation module 145.

As shown, the result of interpreting and/or carrying out the onboarding operations or other instructions (e.g., the shown instructions 113) the Kubernetes cluster creation module is configured to output one or more specified target Kubernetes clusters (e.g., the shown Kubernetes cluster 147). In some cases, the Kubernetes cluster creation module 145 is able to store one or more Kubernetes cluster configurations onto any one or more instances of (and configurations of) storage infrastructure 155. In some cases, an agent (e.g., agent type1, agent type2) can receive or otherwise process one or more instances of onboarding operations 142 that cause the agent to perform specific instructions (e.g., the shown instructions 113) at a particular time and/or in correspondence with particular conditions. In some cases, an agent processes all or portions of onboarding operations 142 so as to synthesize instructions (e.g., instructions 113) that cause the aforementioned one or more Kubernetes cluster configurations to perform specific instructions at a particular time and/or in correspondence with particular conditions so as to implement the intent of the onboarding operations.

As is known in the art, a Kubernetes cluster will have at least some CPU computing resources, at least some storage resources, and at least some networking resources. Accordingly, a Kubernetes cluster has at least minimal computational resources, storage resources, and networking resources to be able to receive such instructions, possibly including executable code that implements one or more agents, which agents are configured to execute on the Kubernetes cluster. In the shown embodiment, such agents are configured by the Kubernetes cluster deployment module 102 and then provided to the Kubernetes cluster creation module 145 via operations of an onboarding module. More specifically, and as shown, the onboarding module outputs a series of onboarding operations 142. The onboarding operations 142 are of a nature that some of them can be used to create the Kubernetes cluster, and some of them can be used to provide for ongoing observability, ongoing governance, as well as to comport with any ongoing onboarding requirements or constraints.

With regard to ongoing observability, ongoing governance and onboarding, a Kubernetes cluster management module (e.g., one or more of the Kubernetes cluster management module 143_{KC1}, Kubernetes cluster management module 143_{KC2}, ..., Kubernetes cluster management module 143_{KCN}) can run in any location, possibly alongside any one or more of the Kubernetes clusters. Thus, once a data management application is operating in/as (e.g., running in or running as) one of the created Kubernetes clusters, the operation of that subject data management application can be managed on an ongoing basis throughout the lifetime of the subject data management application. For example, there may be changes in local customs and/or local requirements such that the Kubernetes cluster and its underlying operations must conform to changes in such local customs or local requirements. This can be accomplished by or facilitated by a Kubernetes cluster management module, possibly in cooperation with an agent.

Any number of agents can be provided to an instance of a Kubernetes cluster management module. Moreover, any agents of any type can be provided to an instance of a Kubernetes cluster management module at any moment in time, even after any under-management Kubernetes cluster has been registered. Strictly as examples (1) a governance agent might be an agent of agent type1 161, and/or (2) an observability agent might be an agent of agent type2 162. Governance rules might change over time and, as such, the governance agent might need to be updated or superseded. Similarly, those things that are interesting to observe might change over time and, as such, the observability agent might need to be updated or superseded.

**FIG. 1A3** shows an example partitioning that maps the functions of the operational modules of a second example system onto the block diagram of the first example system. In particular, FIG. 1A3 includes (1) a data management requirements module 139 comprising governance and observability requirements pertaining to a data management application running in a Kubernetes cluster environment, (2) a Kubernetes cluster deployment module 102 configured to synthesize operations to achieve at least some of the governance and observability requirements, and (3) a Kubernetes cluster creation module 145 configured to instantiate a Kubernetes cluster based on the at least some of the governance and observability requirements, and (4) a Kubernetes cluster management module that is configured to observe ongoing state changes that might occur in (or due to) the data management application running in the Kubernetes cluster environment. As shown, multiple DevOps persons can be involved. Alternatively, an individual DevOps person can fulfill dual roles of receiving alerts 197 as well as issuing queries 195 to monitor and/or control the data management application.

**FIG. 1A4** shows an example partitioning 1A400 that maps the functions of the operational modules onto a hyperconverged computing infrastructure (HCI) configuration. In particular, FIG. 1A4 shows infrastructure 101 being composed of a plurality of computing nodes (e.g., node N1, node N2, ..., node N99), each with respective node-local virtual disks (e.g. virtual disk VD1, virtual disk VD2, ..., virtual disk VD99) which are each interfaced with an HCI cluster configuration tool 179. As shown, the HCI cluster configuration tool receives various types of commands (e.g., resource demands) from infrastructure command module 191. Responsive to such various types of commands, the HCI cluster configuration tool 179 identifies and interconnects and otherwise configures the nodes into a cluster configuration where all three of (1) storage capacity (e.g., non-volatile storage), (2) computing capabilities (e.g., CPUs, memory, etc.), and networking capabilities (e.g., network interfaces, network bandwidth, etc.) can be independently configured by virtue of selection of nodes of particular types. Such a cluster configuration can be provisioned with software modules that cause the cluster configuration as a whole to implement a virtualization system.

For example, the storage capacity of the cluster configuration can be virtualized to appear (e.g., through operation of the shown cluster metadata manager 171) as a single storage device that has an address space sufficient to cover all unique locations of all of the storage devices of the cluster or at least all of the virtual disks that are backed by corresponding storage devices of the cluster. A containerized system such as Kubernetes can be deployed on top of the HCI cluster. In some situations (e.g., within a data center), the skills of infrastructure administrator 105 might include both skills pertaining to configuration and ongoing operation of the HCI cluster, as well as skills pertaining to configuration and ongoing operation of the containerized system. In other situations (e.g., in a typical on-premises situation), the needed skills pertaining to both the configuration and ongoing operation of the HCI cluster as well as skills pertaining to configuration and ongoing operation of a containerized system might be variously divided between two or more infrastructure administrators, each having particular infrastructure-related domain expertise.

As can be understood by those of skill in the art, an infrastructure manager who is skilled regarding configuration and ongoing operation of a containerized orchestration system can merely honor or otherwise configure components of the containerized orchestration system in a manner that stays within the operational boundaries of an underlying HCI cluster. In some cases, a first type of infrastructure manager instructs the containerized orchestration system in a manner that stays within the operational boundaries of an underlying HCI cluster. In other cases, a second type of infrastructure manager instructs components of the underlying HCI cluster to be configured in a manner that supports the needs of the overlying containerized orchestration system.

The foregoing discussions of FIG. 1A1, FIG. 1A2, FIG. 1A3, and FIG. 1A4 pertain to merely some possible embodiments. Many further variations are possible, for example, the systems as comprehended in the foregoing can be implemented in any environment, and/or can be implemented using any of a variety of techniques that may operate differently such as to optimize for one or more selected optimization variables. One way to optimize for one or more selected optimization variables involves determination of a set of feasible deployments even before applying optimization techniques. This is shown and discussed as pertains to FIG. 1B1 and FIG. 1B2.

**FIG. 1B1** presents a system that performs infrastructure-level cluster feasibility analysis. As an option, one or more variations of system 1B100 or any aspect thereof may be implemented in the context of the architecture and functionality of the embodiments described herein and/or in any environment.

The shown infrastructure-level feasibility analysis module 166 takes in resource requirements and constraints, possibly a subset of the DMRC 151 of FIG. 1A2, and normalizes (step 168) the values. Processing continues into loop 180 that successively proposes a candidate infrastructure solution (step 174), tests for feasibility (decision 176), and either rejects the candidate infrastructure solution when the "No" branch of decision 176 is taken, or codifies the candidate infrastructure solution (step 178) when the "Yes" branch of decision 176 is taken. As shown, the output of infrastructure-level feasibility analysis module 166 is a set of feasible candidate infrastructure solutions 182.

It should be noted that the set of feasible candidate infrastructure solutions are merely feasible in terms of having sufficient physical computing resources to meet the given resource requirements and constraints 149. Additional processing might be needed to be able to determine if a given set of logical (and other) constraints can also be met. Such additional processing is shown and described in FIG. 1B2, which is now briefly discussed.

**FIG. 1B2** presents a system that performs application-level cluster feasibility analysis. As an option, one or more variations of system 1B200 or any aspect thereof may be implemented in the context of the architecture and functionality of the embodiments described herein and/or in any environment.

As shown, a data management application feasibility analysis module 198 takes in data management requirements and constraints (e.g., DMRC 151) and considers those data management requirements and constraints with respect to feasible candidate infrastructure solutions drawn from the shown feasible candidate infrastructure solution repository 184. Analysis using these two corpora is carried out by, for each solution in the feasible candidate infrastructure solution repository, considering if a particular solution satisfies governance considerations (decision 186), deployability considerations (decision 188) and observability considerations (decision 190). If all of the foregoing considerations are satisfied, (or can be satisfied during downstream processing), then that particular feasible candidate infrastructure solution is considered for codification (step 192) and stored (e.g., into a feasible data management deployment solution repository 196) in the form of a feasible data management deployment solution 194. In some cases, a deployment calls for specialized deployment bring-up and ongoing observation services. In such situations, it is felicitous to generate and/or configuration of the needed agent code 160 here at step 192. Additionally or alternatively, agent code 160 might be generated elsewhere. Agent code 160 might be stored as a part of a deployment solution (e.g., in a memory space allocation for an agent), or agent code 160 might be merely associated with a particular deployment solution (e.g., by a link or by reference to a repository).

As previously mentioned, even when there is a set of feasible candidate infrastructure solutions, there may be additional processing to determine if a given set of logical and other constraints can also be met. Strictly as an example, a possible logical constraint is whether or not a particular set of applicable storage regulations 134 can be met. Strictly as a further example, one possible logical constraint is whether or not a particular set of applicable storage policies 132 can be met.

Further details regarding general approaches to storage policies are described in U.S. Patent No. 11,853,177.

The foregoing discussion of FIG. 1B2 refers to agent code 160 that is generated and stored as a part of, or associated with, a particular deployment solution. Such agent code might be needed to comport with any one or more of the applicable resource requirements and/or constraints. For example, a data management application (e.g., a disaster recovery (DR) application) might require replication of snapshots across two or more availability zones. To manage such a requirement on an ongoing basis, there needs to be some observability between the subject availability zones. Accordingly, an agent can be defined here, and later deployed into a Kubernetes cluster during some phase of Kubernetes cluster bring-up. Examples of uses of such agents are shown and described as pertains to FIG. 1C1 and FIG. 1C2.

**FIG. 1C1** shows an agent-enabled cluster bring-up technique that is used in systems that implement zero-code administration of data management for containerized workloads. As an option, one or more variations of agent-enabled cluster bring-up technique 1C100 or any aspect thereof may be implemented in the context of the architecture and functionality of the embodiments described herein and/or in any environment.

The figure depicts certain interactions between onboarding module 122 and a Kubernetes cluster creation module 145. As shown, onboarding module 122 delivers agent code 160 to the Kubernetes cluster creation module 145. A running instance of a target Kubernetes cluster 147 in turn executes all or portions of instructions 113 to allocate sufficient resources in the Kubernetes cluster to accommodate bring-up and ongoing execution of the agent.

Any given agent can have an initial configuration (e.g., for bootstrapping the deployment) as well as an ongoing configuration. On an ongoing basis a running agent can receive instructions that cause the agent to take specific steps at a particular time. One possible embodiment of a system that causes the agent to take specific steps at a particular time in response to agent instructions is shown and described as pertains to FIG. 1C2.

**FIG. 1C2** shows an agent-enabled cluster maintenance technique that is used in systems that implement zero-code administration of data management for containerized workloads. As an option, one or more variations of agent-enabled cluster maintenance technique 1C200 or any aspect thereof may be implemented in the context of the architecture and functionality of the embodiments described herein and/or in any environment.

As shown, target Kubernetes cluster 147 hosts running agent 162, which running agent is possibly situated in the Kubernetes cluster due to operation of the deployment described in FIG. 1C1. The running agent receives agent instructions 164. The agent then takes specific steps at particular time(s) in response to the received agent instructions. In this embodiment, agent instructions 164 are provided by onboarding module 122 under a "push" protocol, however other modules may be used to provide agent instructions, either directly or indirectly, to the running agent. In fact, in some situations the running agent requests agent instructions under a "pull" protocol.

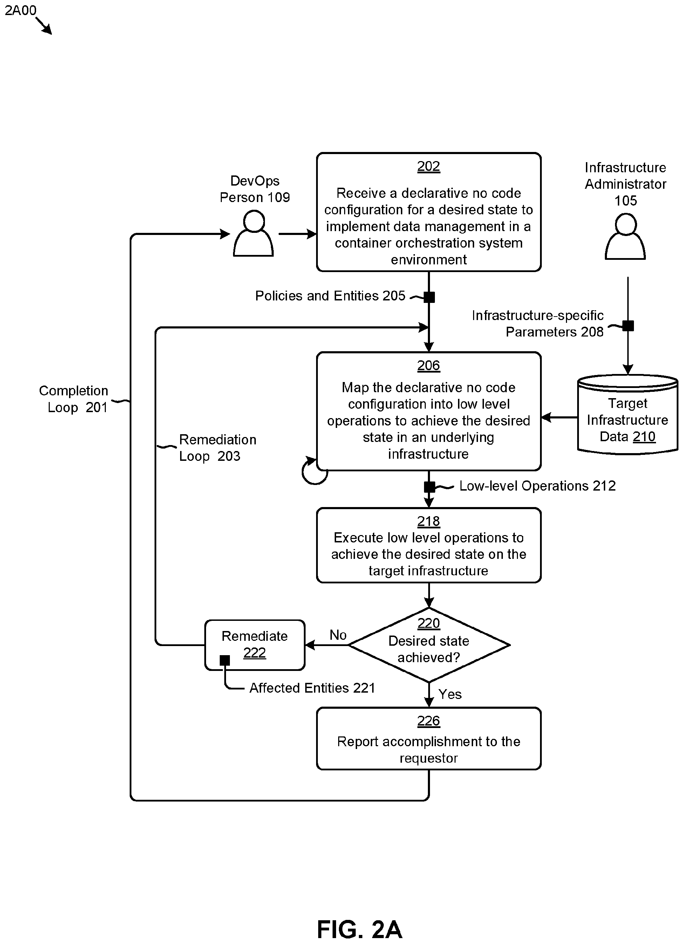

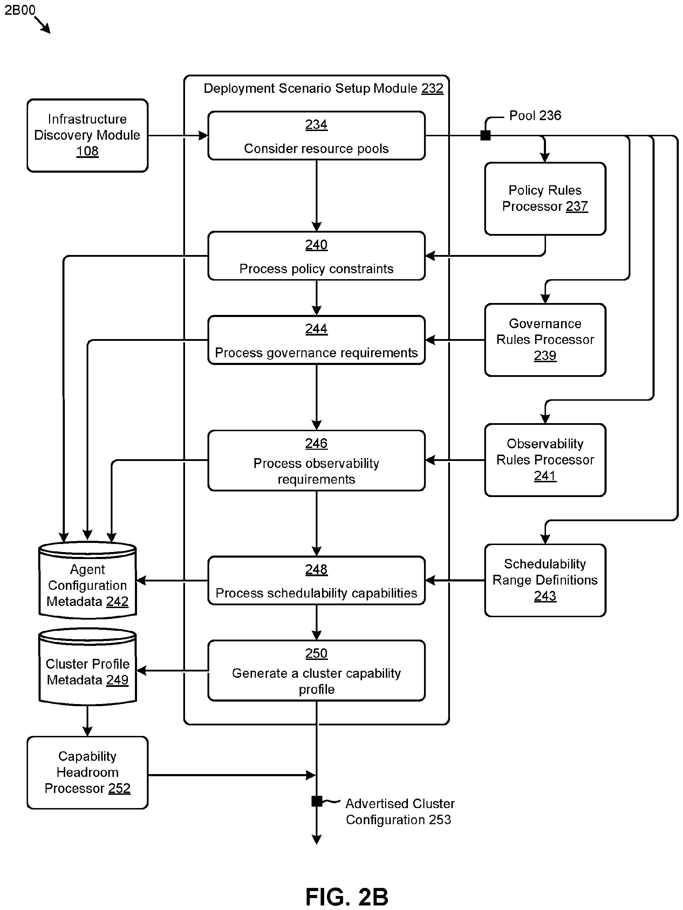

The foregoing discussions of FIG. 1C1 and FIG. 1C2 pertain to merely some possible embodiments and/or ways to implement agent-enabled cluster bring-up and maintenance techniques. Many variations are possible, for example, agent-enabled cluster bring-up and maintenance techniques as comprehended in the foregoing can be implemented in any environment or in accordance with any scenario. In fact, any scenario can be defined with respect to any container orchestration system and/or any container orchestration system environment, of which Kubernetes is merely one example. One example of how to bring-up a containerized data management workload that comports with specific resource requirements and constraints of a particular deployment scenario is discussed hereunder as pertains to FIG. 2A and FIG. 2B.

**FIG. 2A** shows a technique to implement zero-code administration of data management for stateful containerized workloads. The figure depicts an operation flow 2A00 that result in accomplishment of bring-up of a data management application. This particular flow is initiated by an application manager, such as the shown DevOps person 109. In particular, the application manager provides inputs, possibly using a graphical user interface (GUI) to the flow (at step 202). The inputs may be in the form of a declarative no-code configuration for a desired state to be achieved in a container orchestration system. In some cases, and as shown, the declarative no-code configuration includes policies and entities 205, any of which may be provided as inputs, and/or produced as (possibly modified) outputs. At step 206, the declarative no-code configuration is mapped into low-level operations (e.g., API calls) that, either singly or in combination with other low-level operations, serve to foster achievement of the desired state on some particular computing infrastructure. Specifically, the desired state is achieved within or across or coordinated via any number of executable containers of the identified container orchestration system. The processing of step 206 can be informed by the shown target infrastructure data 210, which may in turn be informed by any one or more infrastructure-specific parameters 208. It sometimes happens that a DevOps person and/or an associate can specify infrastructure-specific parameters 208. Additionally or alternatively, infrastructure-specific parameters 208 can be automatically generated.

One possible result arising from the processing of step 206 is a set of infrastructure-specific intents and/or low-level operations 212, which, singly or in combination serve to achieve the desired state on the target infrastructure. Such achievement may require multiple iterations through step 218. Accordingly, decision 220 serves to check if the desired state has been achieved. In some cases, it is merely a matter of time before the desired state is achieved. In other cases, some remediation is needed. As such, when the "No" branch of decision 220 is taken, step 222 serves to remediate the fact that the desired state has not yet been achieved. This is accommodated by providing a remediation loop 203. In some cases, the remediation step modifies parameters for or of affected entities 221.

When the desired state is achieved, the "Yes" branch of decision 220 is taken and the accomplishment is reported (step 226) to the DevOps person (e.g., via the shown completion loop 201).

The foregoing technique to implement zero-code administration of data management for stateful containerized workloads can be practiced in any environment and/or in correspondence to any sort of data management scenario and/or in accordance with any deployment scenario, examples of which are shown and described as pertains to FIG. 2B.

**FIG. 2B** shows various deployment scenario setup considerations that are profiled for use in systems that implement zero-code administration of data management for containerized workloads. As an option, one or more variations of deployment scenario setup considerations 2B00 or any aspect thereof may be implemented in the context of the architecture and functionality of the embodiments described herein and/or in any environment.

As previously mentioned, and for the purpose of a DevOps person's setup and ongoing management of a data management application, it is desired to automatically define a Kubernetes cluster that comports with specific resource requirements and constraints of a particular deployment scenario. The particular embodiment of FIG. 2B depicts a freestanding instance of deployment scenario setup module 232, which module is configured to be able to comprehend the totality of physical and logical constraints that are applicable with respect to setup and ongoing management of a data management application.

As shown, this embodiment considers (1) previously vetted pools (e.g., pool 236) of computing infrastructure, (2) policy constraints (e.g., based on outputs of policy rules processor 237 or other codifications), (3) governance requirements (e.g., based on outputs of governance rules processor 239 or other codifications), (4) observability requirements (e.g., based on outputs of observability rules processor 241 or other codifications), and (5) schedulability capabilities (e.g., based on outputs of schedulability range definitions 243 or other codifications).

As used herein, a "policy" or a "policy rule" or a "policy constraint" refers to a computerized codification of a sought-after behavior of a data management application. A policy might describe a desired recovery point objective (RPO) such as a user-defined limit or threshold of acceptable data loss in the event of a failure. A policy refers to the desired behavior or state or situation rather than referring to any particular way to enforce or implement the policy. For example, if an RPO specifies "1 hour" (of loss of data), one way to implement such an RPO would be to take a snapshot every 1 hour. Thus, in the very worst-case event of a restore after a failure, at most "1 hour's worth" of data would be (acceptably) lost. As another example, a synchronous replication regime might be followed to achieve an aggressive RPO such that zero (or at least much less than one hour's worth of data) would be lost.

As used herein, the term "governance" or "governance rules" or "governance limits" refer to any set of controls and/or management practices that seek to ensure efficient, secure, and operationally-compliant operation of a computing cluster. Strictly as an example, a governance rule might specify a limit or threshold on how much bandwidth data a particular data management application can use. Additionally or alternatively, a governance rule might specify a limit or threshold on how much storage (e.g., gigabytes of storage) snapshots can consume. Governance policies are often specified by infrastructure administrators in a manner such that self-service users can merely acknowledge and/or agree to a governance policy without having to calculate any values or parameters that underly that governance policy.

As used herein, "observability" or "observability rules" refer to a computerized codification of a degree or granularity of interaction with users during the time that a data management application is running. For example, an observability rule might specify that a warning is emitted (e.g., to a user) in the event that actual usage of bandwidth is approaching a given governance limit. Additionally or alternatively, an observability rule might specify when (e.g., under what conditions) and how (e.g., as an alert, in a summary, etc.) to report a governance policy violation (e.g., an RPO violation), and/or to report a calculated health of a storage volume, etc.

As used herein, "schedulability" or "schedulability rules" refer to techniques for determining workload placement and triggering based on storage failure domains. For example, when determining a secondary location (e.g., a secondary failure domain) for storage of a collection of snapshots, the secondary location workload that receives the snapshots from a primary location (e.g., in a primary failure domain) would need to have enough storage capacity (and corresponding quota) to receive and retain as many snapshots from a primary location as would be needed to satisfy any in-force governance rules. Additionally or alternatively, when determining a secondary location (e.g., a secondary failure domain) for storage of a collection of snapshots, the workload to receive such snapshots would need to be provisioned with sufficient bandwidth as would be needed to receive the snapshots from a primary location (e.g., in a primary failure domain) at a rate at least as fast as the data of the snapshots are being produced. Additionally or alternatively, when determining a secondary location for placement of a data management workload, the secondary location must be provisioned with at least as much storage capacity and/or bandwidth availability as would be needed to satisfy any in-force governance rules.

Based on performance of the operations of the deployment scenario setup module 232 (e.g., operation 234, operation 240, operation 244, operation 246, operation 248, and operation 250), a vetted Kubernetes cluster configuration is emitted as an advertised cluster configuration 253, which in turn is used by downstream processing to establish a Kubernetes cluster that satisfies at least the requirements of the advertised cluster configuration.

To vet any potential Kubernetes cluster capability configuration for suitability against a particular data management application, all of, or at least some of, the known constraints and requirements are to be considered. More particularly, the logical aspects of the foregoing known constraints and requirements are to be considered with respect to the physical aspects of a computing resource pool. This can be accomplished by processing the flow that is shown within the shown deployment scenario setup module. More specifically, what is needed, and what is provided by operation of the deployment scenario setup module, is a desired cluster profile (e.g., as depicted by cluster profile metadata 249) and instructions or data sufficient to generate agent code (e.g., as depicted by agent configuration metadata 242).

One way to generate a desired cluster profile and any instructions or data sufficient to generate agent code is by processing the shown flow. The flow begins at operation 234 by interrogating infrastructure discovery module 108 so as to obtain one or more resource pools that had already been defined within the then-known constraints (e.g., size of the infrastructure, logical availability based on tenancy, etc.). Then, the one or more resource pools are subjected to a series of processing steps that are configured specifically to compare logical requirements and constraints against the physical characteristics of the foregoing resource pools. If no conflict is identified, then a viable cluster configuration is advertised for downstream processing such as by a Kubernetes cluster creation module (see Kubernetes cluster creation module 145 of FIG. 1A2), and/or downstream processing such as by a Kubernetes cluster registration tool (see Kubernetes cluster registration tool instances as shown in FIG. 1A2), and/or downstream processing such as by a Kubernetes cluster deployment module (see Kubernetes cluster deployment module 102 of FIG. 1A2). On the other hand, if a conflict or impossibility is identified for a particular cluster configuration, then that configuration is not advertised.

As shown, each of the viability checks (e.g., operation 234, operation 240, operation 244, operation 246, operation 248, and operation 250) take in specific data from various sources and perform logical checks to vet a particular pool against some set of data management needs.

As used herein, a "pool" refers to a logical partition of the infrastructure on which a Kubernetes cluster is provisioned. Such a logical partition might be backed by actual in existence and allocated infrastructure resources. For example, a pool might partition (e.g., allocate) 100GBytes of an actual 1Terabyte storage device. Additionally or alternatively, a logical partition might be provisionally backed by prophetically allocatable infrastructure resources. For example, a pool might assume an allocatable amount of computer memory that could be allocated from a prophetically-available memory footprint.

Various ones of the viability checks store their findings as agent configuration metadata 242 and/or as cluster profile metadata 249. Once such viability checks have been performed and their respective findings stored, a generate step is surmounted (operation 250), which generation results in a viable cluster configuration. In some cases, a particular profile is further vetted (e.g., via capability headroom processor 252) to be sure the advertised cluster configuration 253 has enough headroom to account for any needed expandability.

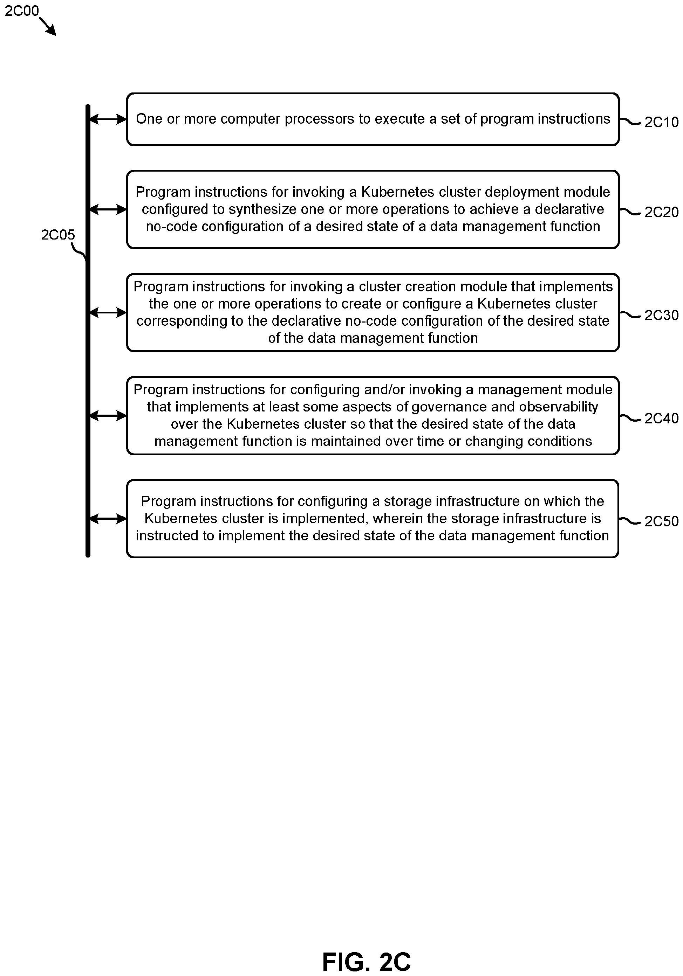

The techniques of FIG. 2B vets a computing resource pool against requirements and constraints, however there still remains the task of converting the advertised cluster configuration into container orchestration-specific implementation. Bring-up of such container orchestration-specific implementations can be accomplished using some or all of the techniques that are shown and described as pertains to FIG. 2C.

**FIG. 2C** shows an example bring-up method as used in systems that implement zero-code administration of data management for containerized workloads. More specifically, FIG. 2C depicts system 2C00 as an arrangement of computing modules that are interconnected so as to operate cooperatively to implement certain of the herein-disclosed embodiments. The shown partitioning of system 2C00 is merely illustrative and other partitions are possible. In some embodiments, the functioning of system 2C00 implements all or part of the foregoing Kubernetes cluster creation module 145.

Variations of the foregoing may include more or fewer of the shown modules. Certain variations may perform more or fewer (or different) steps and/or certain variations may use data elements in more, or in fewer, or in different operations. Still further, some embodiments include variations in the operations performed, and some embodiments include variations of aspects of the data elements used in the operations.

FIG. 2C depicts a block diagram of a system to perform certain functions of a computer system. As an option, system 2C00 may be implemented in the context of the architecture and functionality of the embodiments described herein. Of course, however, system 2C00 or any operation therein may be carried out in any desired environment. The system 2C00 comprises at least one processor and at least one memory, the memory serving to store program instructions corresponding to the operations of the system. As shown, an operation can be implemented in whole or in part using program instructions accessible by a module. The modules are connected to a communication path 2C05, and any operation can communicate with any other operations over communication path 2C05. The modules of the system can, individually or in combination, perform method operations within system 2C00. Any operations performed within system 2C00 may be performed in any order unless as may be specified in the claims. The shown embodiment implements a portion of a computer system, presented as system 2C00, comprising one or more computer processors to execute a set of program code instructions (module 2C10) and modules for accessing memory to hold program code instructions to perform: invoking a Kubernetes cluster deployment module configured to synthesize one or more operations to achieve a declarative no-code configuration of a desired state of a data management function (module 2C20); invoking a cluster creation module that implements the one or more operations to create or configure a Kubernetes cluster corresponding to the declarative no-code configuration of the desired state of the data management function (module 2C30); invoking a management module that implements at least some aspects of governance and observability over the Kubernetes cluster so that the desired state of the data management function is maintained over time or changing conditions (module 2C40); and configuring a storage infrastructure on which the Kubernetes cluster is implemented, wherein the storage infrastructure is instructed to implement the desired state of the data management function (module 2C50).

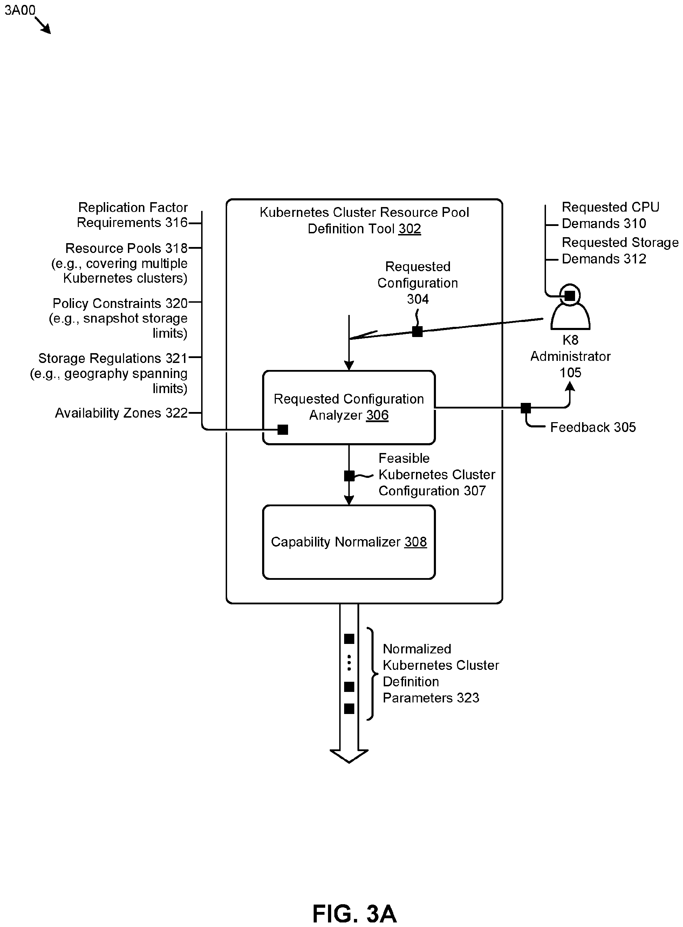

The techniques of FIG. 2B and FIG. 2C might rely on, at least in part, modules that comprehend container orchestration-specific vernacular such that, for example, a series of predefined Kubernetes-specific application programming interfaces can be used to create, register and maintain one or more desired Kubernetes clusters to handle the particular data management application. This can be accomplished using the techniques that are shown and described as pertains to FIG. 3A.

**FIG. 3A** shows various Kubernetes cluster resource pool definition techniques 3A00 as used in systems that implement zero-code administration of data management for containerized workloads. As an option, one or more variations of Kubernetes cluster resource pool definition techniques 3A00 or any aspect thereof may be implemented in the context of the architecture and functionality of the embodiments described herein and/or in any environment.

The disclosure pertaining to FIG. 1A2 includes a discussion pertaining to the existence of and capabilities of Kubernetes cluster creation module 145. Inasmuch as stateful containerized data management workloads may have a large number of parameters, and inasmuch as such stateful containerized data management workloads may depend on underlying infrastructure capabilities, it follows that, at least for automated or semi-automated configuration (and later generation) of a properly-defined Kubernetes cluster (e.g., one that satisfies the demands of a desired data management application), a tool can relieve the burden that this technology places on persons responsible for the data management operation (e.g., a DevOps person and/or a K8 administrator). Accordingly, FIG. 3A shows and discusses a Kubernetes cluster resource pool definition tool 302. Rather than merely passing cluster configuration demands to a Kubernetes application programming interface (e.g., as arguments of API calls), it is felicitous to analyze cluster configuration demands with respect to parameters that are pertinent to a subject stateful containerized data management workload, and thereafter to either ratify the requested configuration or provide feedback to the requestor.

More particularly, the shown requested configuration analyzer 306 can compare a requested cluster configuration (e.g., requested CPU demands 310, requested storage demands 312, etc.) to parameters that are pertinent to a subject stateful containerized data management workload (e.g., replication factor requirements 316, candidate resource pools 318, policy constraints 320, storage regulations 321, candidate availability zones 322, etc.), make assessments, and possibly produce feedback 305 as guidance to a Kubernetes cluster administrator. Assuming that requested configuration analyzer 306 determines that there is at least one feasible Kubernetes cluster configuration 307 that addresses the initial version requested configuration 304, or a revised version of requested configuration 304, then processing advances to the shown capability normalizer 308. It is here that the capability normalizer reconciles any units or terms used between the set of parameters that are pertinent to a subject stateful containerized data management workload produced and units or terms used in the resolved-to requested cluster configuration. As shown, the output of the shown Kubernetes cluster resource pool definition tool is a set of normalized Kubernetes cluster definition parameters 323.

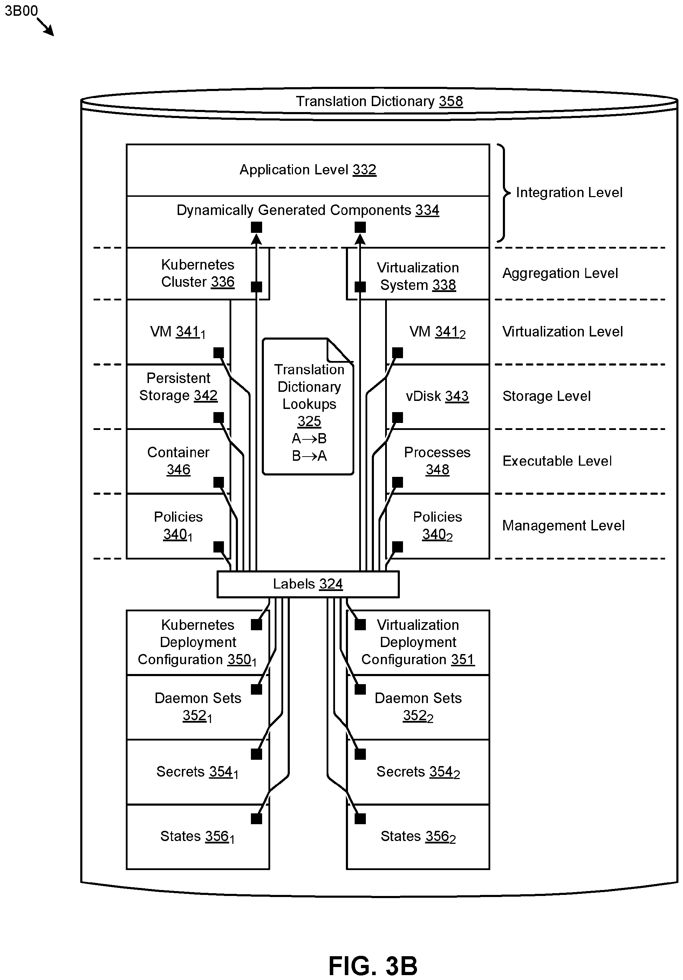

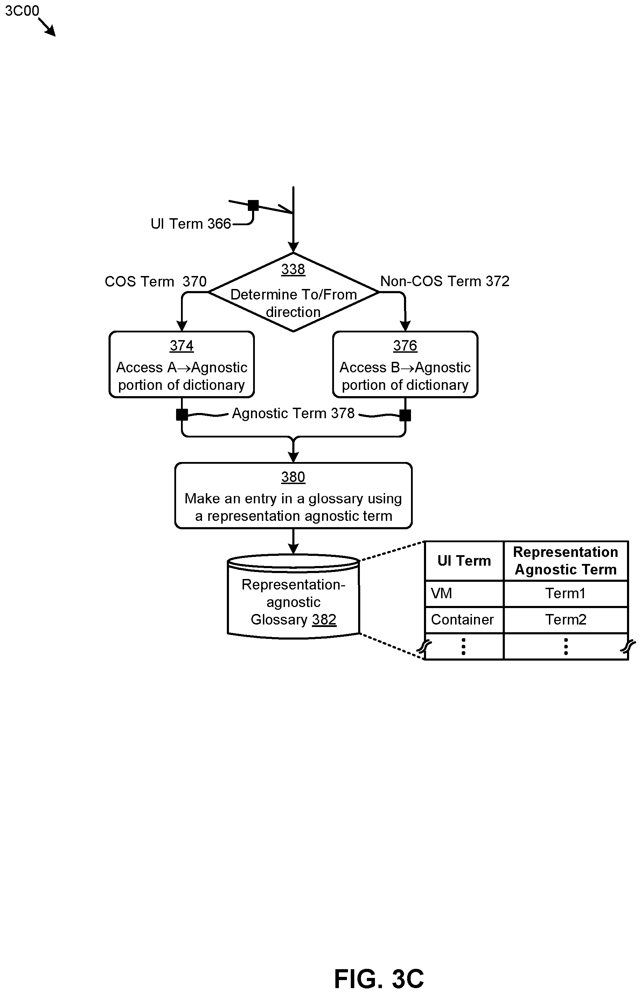

Now, returning to the discussion of the capability normalizer there are many situations where the foregoing units and terms are semantically different, and mere conversion calculations (e.g., like converting ounces to pounds) is insufficient. One way to deal with situations where units and terms are semantically different is to reconcile terms using a dictionary. Such a dictionary is shown and discussed as pertains to FIG. 3B. Techniques for using such a dictionary are discussed as pertains to FIG. 3C.

**FIG. 3B** shows an automated dictionary-based translation facility 3B00 as used in systems that implement zero-code administration of data management for containerized workloads.

The translation dictionary lookups 325 employed in the automated dictionary-based translation facility (e.g., translation dictionary 358) operates by taking as an input, a term of a first environment (e.g., a Kubernetes term) and translating it into an output term of a second environment (e.g., a virtualization system term), shown as A→B. Additionally or alternatively, the automated dictionary-based translation facility is able to perform a reverse lookup by taking as an input a term of the second environment (e.g., a virtualization system term) and translating it into an output term of the first environment, shown as B→A. There can be many terms and translations, only some examples of which are shown in FIG. 3B. Accordingly, Table 2 is presented strictly for illustrative purposes. Other terms, and other environments, and other translations are possible.

**Table 2: Example term-to-term translations**

| **Semantic** | **Kubernetes Environment Term** | **Virtualization System Term** |
|---|---|---|
| Container Orchestration System Executable Unit Aggregation | Kubernetes Cluster 336 | Virtualization System 338 |
| Virtualization Unit | VM 341₁ | VM 341₂ |
| Non-volatile storage | Persistent Storage 342 | vDisk 343 |
| Executable Unit | Container 346 | Processes 348 |
| Management Entities | Policies 340₁ | Policies 340₂ |
| Deployment Configuration | Kubernetes Deployment Configuration 350₁ | Virtualization System Deployment Configuration 351 |
| Daemon | Daemon Sets 352₁ | Daemon Sets 352₂ |
| Encryption/Decryption Secrets | Secrets 354₁ | Secrets 354₂ |
| Stateful Variables | States 356₁ | States 356₂ |

Also shown in FIG. 3B is a technique for labeling. In this particular embodiment, a term might be given one or more labels 324, which labels might refer to a name of an environment (e.g., label_K="Kubernetes" and/or label_D="Distribution 20200101". A label can apply to any term or level. For example, and as shown, a label can be applied to any one or more dynamically generated components 334. After a label is applied such as to an executable component, it survives even when one or more of such executable components are integrated into a data management application (e.g., such as might occur at application level 332).

Any one or more of the foregoing automated dictionary-based translation facilities can be used in whole or in part, in any environment and/or for any purpose. In fact, some implementations map different environment-specific variables (e.g., pertaining to a Kubernetes environment, or pertaining to a virtualization system environment) into an agnostic term (e.g., an environment-agnostic term or a representation-agnostic term). This is shown and described as pertains to FIG. 3C.

**FIG. 3C** shows a dictionary-enabled representation-agnostic term generation facility 3C00 as used in systems that implement zero-code administration of data management for containerized workloads.

The figure is being presented to illustrate how different environment-specific variables (e.g., pertaining to a Kubernetes environment, or pertaining to a virtualization system environment) can be translated into an agnostic term 378 (e.g., an environment-agnostic term or a representation-agnostic term). This particular embodiment exemplifies translations to/from either a container orchestration system term (e.g., COS term 370) or a non-COS term 372. It does so by first determining the origin of the UI term 366 (e.g., a COS term or a non-COS term), and then accessing a translation dictionary either in a A-to-Agnostic fashion (step 374) or in a B-to-Agnostic fashion (step 376). The result of the lookup is a representation agnostic terms that can be used in downstream processing. In some cases, terms that are used in a particular context are entered (step 380) into a glossary (e.g., representation-agnostic glossary 382). The language of the representation agnostic terms is arbitrary. That is, such representation agnostic terms need not be human readable.

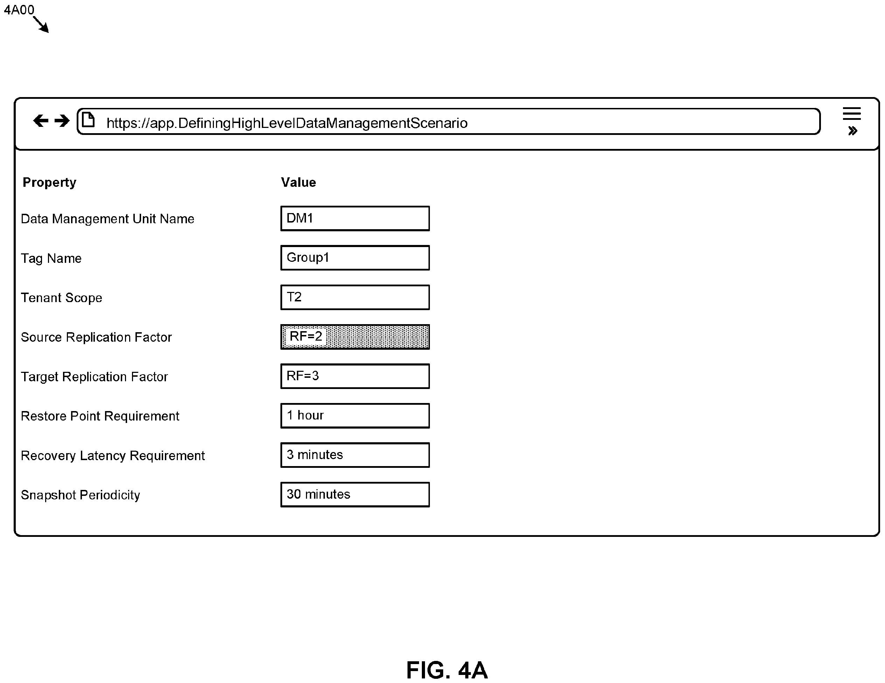

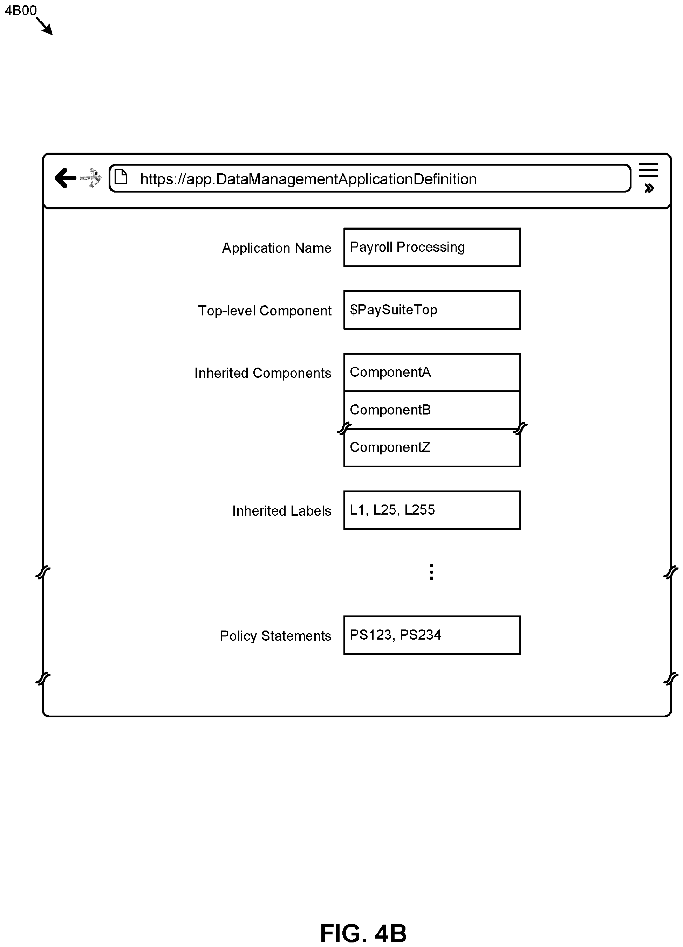

The foregoing discussions of FIG. 3A, FIG. 3B, and FIG. 3C pertains to merely some possible embodiments and/or ways to generate representation agnostic terms that are in turn used in defining executable entities (e.g., an executable container, a Kubernetes cluster, a virtual machine, a Kubernetes pod, resources and/or resource pools, etc.). Many variations are possible. For example, a tool for semi-automated Kubernetes cluster resource pool definitions can be implemented in any environment and/or can use any of a variety of user interfaces, examples of which user interfaces are shown and described as pertains to the following FIG. 4A, and FIG. 4B.

**FIG. 4A** is a self-service user interface 4A00 for defining high-level data management scenarios through use of a graphical user interface. As an option, one or more variations of this self-service user interface and/or underlying data management application property manipulation techniques or any aspect thereof may be implemented in the context of the architecture and functionality of the embodiments described herein and/or in any environment.

This figure is being presented to illustrate one possible way that a DevOps person (for example) can define a data management scenario through manipulation of graphical interface widgets rather than through coding of software code constructs. As shown, this data management application property manipulation technique involves a GUI to addresses the "no-code" concept whereby a DevOps person can interact with an application manager module and/or a GUI so as to resolve to declarative statements of desired data management behavior for an application. More particularly, this GUI facilitates self-service specification of a desired behavior of the data management function or configuration of an application, which data management function or configuration in turn can be expressed as a set of intents that express a desired state for application-level data protection.

Many scenarios are possible, and each different scenario involves different sets of properties and/or each different scenario involves different sets of values of parameters that underly the properties. In this example, a data management unit called "DM1" is intended to operate within the limitations (e.g., infrastructure constructs, data size limitations, cost limitations, etc.) of tenant T2. As shown, tenant T2 wants to configure a desired replication factor of RF=3 even though the former replication factor is (or had been) RF=2. The tenant also wants to express each of, a restore point requirement, a recovery latency requirement, and a snapshot periodicity. It should be noted that the DevOps person can deal in high-level data management constructs (e.g., recovery latency requirement of "3 minutes") rather than dealing at low levels of operation and/or rather than dealing with infrastructure constructs.

One should note that the foregoing discussion pertains to the situation where the DevOps person wants to establish a new, to-be-established data management application in the form of a Kubernetes cluster. It is also possible that the DevOps person wants to re-target a pre-existing data management application in the form of a Kubernetes cluster. To facilitate retargeting a pre-existing data management application (e.g., a source data management application), the property fields of the GIU can be auto-populated based on properties of the pre-existing data management application (e.g., see the greyed-out "Source Replication Factor RF=2"), and the DevOps person can reference previously in-force property values when specifying new property values to be used to generate a Kubernetes containerized embodiment of a data management application.

The foregoing discussion of FIG. 4A pertains to merely some possible embodiments and/or ways to implement a self-service user interface for defining high-level data management scenarios. Many variations are possible, any of which can be implemented in any environment. Moreover, a given scenario may correspond to a particular data management application. One way to define a data management application is through a self-service tool, one embodiment of which is shown and described as pertains to FIG. 4B.

**FIG. 4B** depicts a user interface for collecting the data management needs of an application 4B00. As an option, one or more variations of such a user interface for collecting the data management needs of an application or any aspect thereof may be implemented in the context of the architecture and functionality of the embodiments described herein and/or in any environment. This example screen shows various aspects (e.g., "Application Name," "Top-Level Component," Inherited Components," Inherited Labels," and "Policy Statements") of a particular data management application.

### ADDITIONAL DISCUSSION OF SELECTED TOPICS

### Containers and Container Orchestration Systems (Kubernetes)

A container (sometime called an "executable container") is a standard unit of software that packages up the code and its dependencies so that applications can be run quickly, dependably, and reliably in different computing environments. This portability, alongside the promise of making efficient use of computing resources, has led to rapid proliferation and use of such containers. The confluence of this trend and the realization of the benefits of an immutable infrastructure paradigm (e.g., traceability, predictability, and platform-independent upgradability) have resonated with organizations that are looking for technologies to drive rapid digital transformation in enterprises.

Container images serve as building blocks of business applications and get instantiated as microservices once deployed and started. But the full power of this technology comes when used in conjunction with an orchestration engine that allows for declarative specification, scaling, and management of containerized workloads. One such orchestration engine that has gotten the lion's share of adoption and mindshare is Kubernetes. Others include Hashi Corp's Nomad and Apache Mesos.

### The Rise of DevOps

There are pitfalls that arise when development teams and ops teams split (e.g., when employing sysadmin approaches to running complex computing systems). Realization of the complexity involved in the running of these systems has given birth to a class of software engineers called "Site Reliability Engineers" (SREs). These engineers focus on running the products and creating systems to accomplish the work that would otherwise be performed, often manually, by sysadmins. In general, SREs are responsible for the availability, latency, performance, efficiency, change management, monitoring, emergency response, and capacity planning of their specific service(s).

One of the first and foremost goals is to meet the technology at the place/status where it interfaces with humans. In one case, the operators of enterprise services/applications need features that serve as plumbing into and out of Kubernetes. Moreover, the foregoing human-machine interface needs to be deployed at a level that meets the capabilities of so called "DevOps" or "Site Reliability Engineers."

Even though not every organization would have or need this/these role(s), keeping this/these roles as conceptually distinct from the traditional sysadmin role helps in building the right software abstractions and plumbing as will be explained later in this document.

### Containers and Hardware Virtualization

Discussed at length herein are some of the important strengths of using containers and Kubernetes for application development, delivery, and day-2 operations. In this context, it is helpful to understand the role of virtual machines and the adjacency they offer. Although containers are sometimes thought of as the next phase of virtualization, surpassing hardware virtualization, the reality for most organizations is less about revolution than evolution. Containers and hardware virtualization not only can, but very frequently do, coexist well and actually enhance each other's capabilities. Virtual machines (VMs) provide many benefits, such as strong isolation, OS automation, and a wide and deep ecosystem of solutions. Organizations do not need to make a choice between containers and VMs. Instead, organizations can continue to use VMs to deploy, partition, and manage their hardware, while using containers to package their apps and utilize each VM more efficiently.

### Motivating the Storage Consumption Model Change

The advent of containers and Kubernetes has brought about changes in the storage consumption model. Consider the following examples:
Installing PyTorch from the Bitnami Helm Chart repository on a Kubernetes cluster with the default configuration is as simple as:
$ helm repo add bitnami https://charts.bitnami.com/bitnami
$ helm install my-release bitnami/pytorch

Examples of some parameters (specifically related to storage) that can be customized are shown in Table 3.

**Table 3: Commonly used parameters**

| **#** | **Parameter** | **Description** | **Default Value** |
|---|---|---|---|
| 1 | global.storageClass | Global StorageClass for persistent volume(s) | "" |
| 2 | persistence.enabled | Use a PVC to persist data | true |
| 3 | persistence.mountPath | Data volume mount path | /bitnami/pytorch |
| 4 | persistence.accessModes | Persistent volume access mode | [ ] |
| 5 | persistence.size | Size of data volume | 8Gi |
| 6 | persistence.storageClass | Persistent volume storage class | "" |
| 7 | persistence.annotations | Persistent volume claim annotations | { } |

One approach to specifying any of the above parameters for customizing the PyTorch deployment involves using --set arguments to helm install:
$ helm install my-release \
--set persistence.size=40Gi \ bitnami/pytorch

As another example, consider Prometheus, an open-source, metrics-based monitoring system. The values.yaml specify the storage needs of each of the subsystems that can be enabled when deploying Prometheus besides the needs of the default Prometheus server, which is Alert Manager and PushGateway.

The above two examples are intended to motivate the change in the storage consumption model brought about by the standardization of application deployment using containers in orchestrated container runtime environments such as Kubernetes in that storage is consumed as a service when the application is deployed and has no fixed relationship to the machine on which the application instance happens to be brought up by Kubernetes. The orchestration system is responsible for making the storage available dynamically to the application pod, unlike in the case of a virtual machine where the administrator is responsible for a relatively static assignment of disks. This change in the consumption model of the storage means that administration and management of machine or host-centric storage policies and data protection policies are quite cumbersome to use at best.

### Inadequacy of Machine-centric, IT-driven Data Management for Container-native Workloads

There are many reasons why machine-centric data management services are not suitable for use with the Kubernetes-orchestrated containerized workloads. Here are three such reasons:
1. The Kubernetes scheduler is responsible for instantiating microservice instances on some worker node(s) that it sees fit when the pods are dynamically created/scheduled. So, the specific machine on which the application pod comes up is incidental.
2. Application operators (i.e., a "DevOps person") have to translate between the Kubernetes abstractions (e.g., persistent volumes, volume snapshot, failure domain topology constructs, etc.) and abstractions in the underlying storage fabric that back the Kubernetes constructs to specify policies such as those for disaster avoidance, disaster recovery, workload rebalancing, and copy data management (e.g., replication, observability, troubleshooting).
3. Support for high-level data management verbs (e.g., data replication or disaster recovery) need to carry semantics that are agnostic to any particular implementation onto any particular computing infrastructure.

The impact of these inadequacies demand practical solutions.

### Self-service Storage Provisioning and Data Management

Container-Native workloads managed by orchestrator systems such as Kubernetes require the enablement of application-centric, operator-driven storage provisioning and data management services. Except for requiring some minor enhancements, storage volume groups (by virtue of decoupling storage resources from compute resources) provide an excellent way for presenting block storage to stateful containerized services. However, advancements, such as disclosed herein are needed to simplify consumption of file shares and object storage from operator-driven environments. Enabling application-centric, operator-driven data management services is facilitated by stitching together of the APIs so that both functionality and observability needs can be plumbed into Kubernetes, thus enabling declarative consumption of data management features such as snapshotting and replication for all types of storage that are under the unified storage umbrella.

Table 4 summarizing how the herein-disclosed techniques aids IT administrators and other application operators.

**Table 4: Roles of IT administrators and application operators**

| **#** | **Aspect** | **It Administrator** | **DevOps / Application Operator** |
|---|---|---|---|
| 1 | Responsibilities | (1) Setup Kubernetes/OpenShift clusters, setup storage policies. | Manage the day-1 and day-2 operations of applications running on Kubernetes. Container-native storage services (CNSS) is primarily to enable consumption of storage services using Kubernetes constructs to these application operators. |
| | | (2) Carve out compute, storage and networking resources. | |
| | | (3) Isolate use of fabric resources. | |
| | | (4) Setup and advertise failure domains, manage and maintain infrastructure (patch, upgrade, expand, account), etc. | |
| 2 | User Interface | Prism / Prism Central | Kubectl and CNSS UI |
| 3 | Application Programmer Interface | V4 API hosted on PC | CNSS custom resources hosted on Kubernetes |

Table 5 is a summary of enhancements contemplated herein that serve for running and observing containerized workloads managed by Kubernetes.

**Table 5: Aspects of containerized workloads managed by Kubernetes**

| **#** | **Aspect** | |
|---|---|---|
| **1** | **Support the New Storage Consumption Model** | |
| | Storage-as-a-Service (SaaS) for containerized workloads running in orchestrator-driven environments: | |
| | | • Micro-service-centric and / or application-centric storage provisioning and storage policy administration. e.g., replication factor (RF), bring your own key encryption (BYOK). |
| | | • Unified storage access: ReadWriteOnce, ReadWriteMany, ReadOnlyMany with support for easy-to-spin-up and tear-down of shared (e.g., network-attached storage (NAS)) volumes and object stores buckets. |
| | | • Support for failure domain topology and administrative domain topology-aware storage provisioning. |
| **2** | **Support App-centric Business Continuity and Disaster Recovery** | |
| | Support for micro-service-centric or application-centric data protection features: | |
| | | • Disaster avoidance |
| | | • Disaster recovery |
| | | • Backup and Restore |
| **3** | **Support for Better Interaction Between IT / Infra Admin and DevOps** | |
| | Support fine grained storage contracts between Infra and DevOps: | |
| | | • Infrastructure quotas per application or microservice level |
| | | • Storage accounting for metering purposes for Infra |
| | | • Observability (storage capacity and performance) at application / microservice granularity for DevOps |
| | | • Traceability of application storage usage to infrastructure resources for troubleshooting etc. |
| **4** | **Support Application / Volume Migration and Hybrid Cloud Use Cases** | |
| | Support for migrating applications and volumes between Kubernetes or OpenShift clusters (or any container-orchestration runtime clusters) running anywhere (without the need for customers to buy a different software for portability or scaling). | |
| **5** | **Support Hyperscalar-like Infrastructure Experience** | |
| | Cloud providers offer node, service, and route controllers. Kubernetes clusters can straddle infrastructure constructs. | |

Following is a listing that exemplifies a subset the features considered herein:
1. Support for the underlying storage fabric to export supported StorageClasses in a declarative way.
2. Declarative way for static and dynamic provisioning of non-ephemeral persistent volumes (PVs) of different types.
3. Support for dynamic provisioning of ephemeral volumes.
4. Support for resizing persistent volumes.
5. Support for attaching and detaching persistent volumes to/from nodes.
6. Support for snapshotting, cloning and restoring from snapshotted persistent volumes.
7. Volume capacity and volume health monitoring.
8. Storage topology awareness.
9. Volume ownership and permission related features.

It is important to note that some features either do not rely on data management facilities or can be operated without data management facilities.

### Container-native Data Services for Addressing the Data Management Gap

Container-native data services can be composed of many different subcomponents. In one semantic, container-native data services can be thought of as encompassing two parts:
(1) container-native storage services (CNSS) and (2) container-native structured data services (CNSDS).

The disclosures herein encompass making unified storage and data management features available to containerized workloads orchestrated by Kubernetes, targeting the application administrators or the SREs described earlier in this document. CNSS and cooperating modules enable data availability, data protection, copy data management, and workload rebalancing features for block storage, file storage, and object storage, all while purposely abstracting away the details of the underlying infrastructure.

Following is a list of selected functions that CNSS provides to the workload running inside a Kubernetes cluster:
1. Provide administrative topology awareness and failure domain topology awareness when a Kubernetes cluster were to encompass multiple PEs and, possibly, multiple availability domains (AZs).
2. Provide data locality-aware scheduling of pods on Kubernetes clusters that span multiple nodes. The scheduler extension also consults with a witness to determine the fast path to data in case of asymmetric storage access (such as in the case of sync replication).
3. Item (1) and item (2) together cater to customers that desire to have disaster avoidance setups, provide for capturing and storing the policies around snapshotting frequency, replication, recovery point optimization (RPO), local retention, remote retention, etc.
4. Provide for granular specification of resources on which the policies must be applied.
5. Provide for schedule-driven and policy-driven actions.
6. Provide for pairing of Kubernetes clusters for disaster recovery.
7. Provide for replication of the application configuration and other application resources to the target. The target can either be another "warm" Kubernetes cluster (far DR) or a "hot" standby Kubernetes cluster (near DR) or some other storage system.
8. Provide for determining if offloading of the data replication to the underlying storage fabric is possible, and if it is determined affirmatively, will offload data replication and coordinate application resource replication and user experience.
9. Provide for decoding the structure of the application resources during recovery and for moving/invoking the application on another Kubernetes cluster.
10. Provide for specifying hooks for customizing a snapshot during the creation time such as quiescing the application.
11. Provide for observability features, such as the status and progress of the offloaded data replication.

CNSS heralds ease-of-use support for any/all of: disaster avoidance, disaster recovery, business continuity, copy data management, and workload rebalancing in an application-centric way for workloads managed by Kubernetes. Moreover, the features of CNSS are consonant with existing infrastructure and existing product overlays. As such:
1. These features appeal to application/service administrators who drive digital transformation in enterprises by simplifying day-2 data management tasks for containerized and orchestrator-managed applications.
2. These features provide another avenue to realizing a long sought-after hybrid cloud vision.

These features, either when taken singly or in combination, serve to exploit the true power of the converged virtualization systems.

### SYSTEM ARCHITECTURE OVERVIEW

### Additional System Architecture Examples

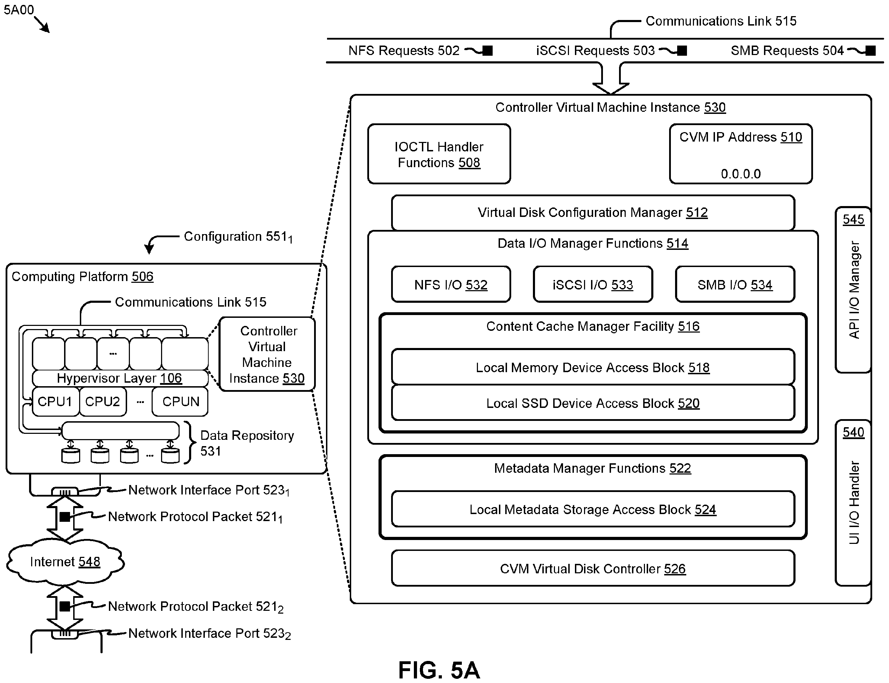

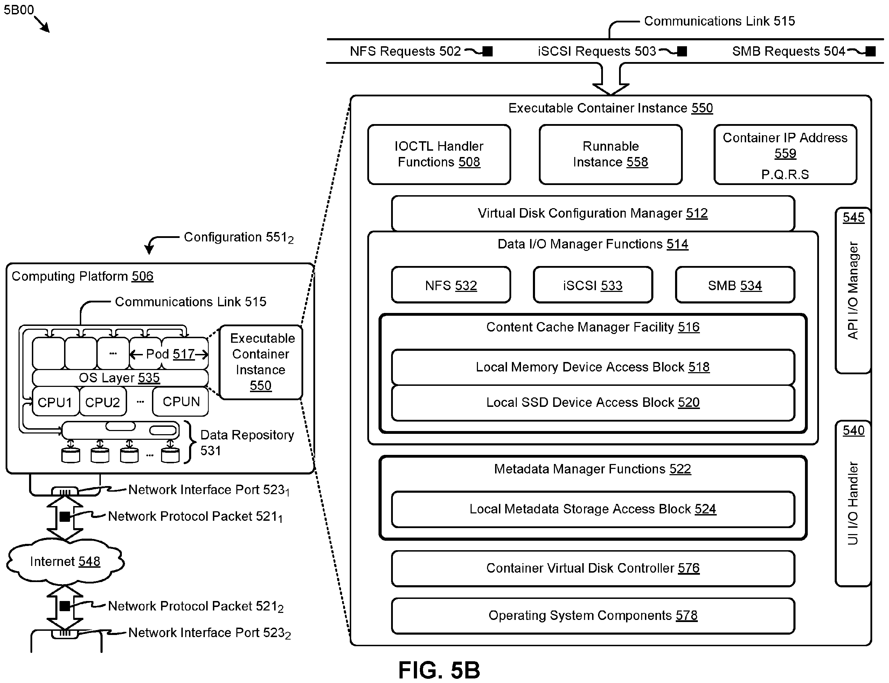

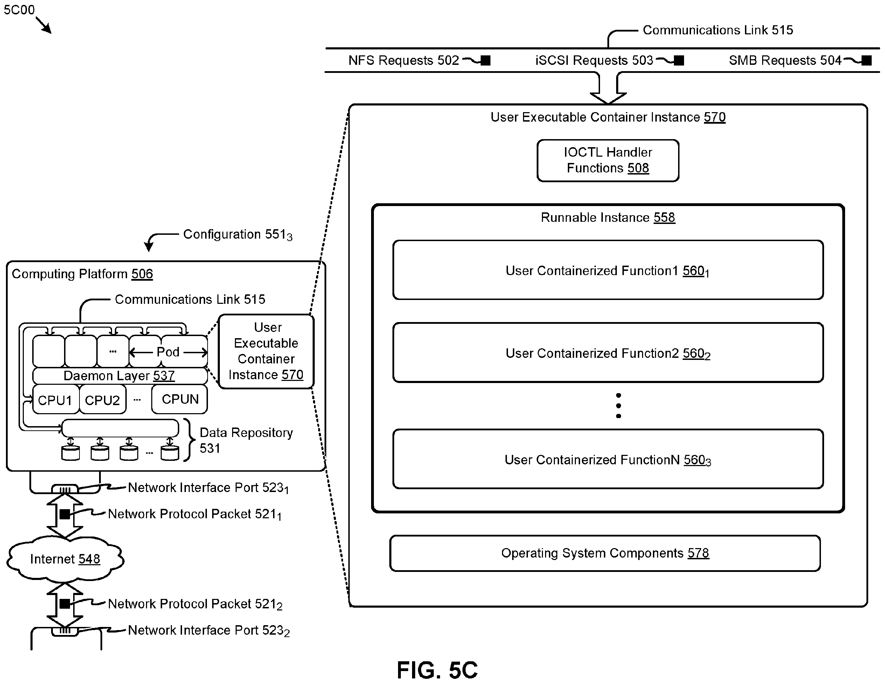

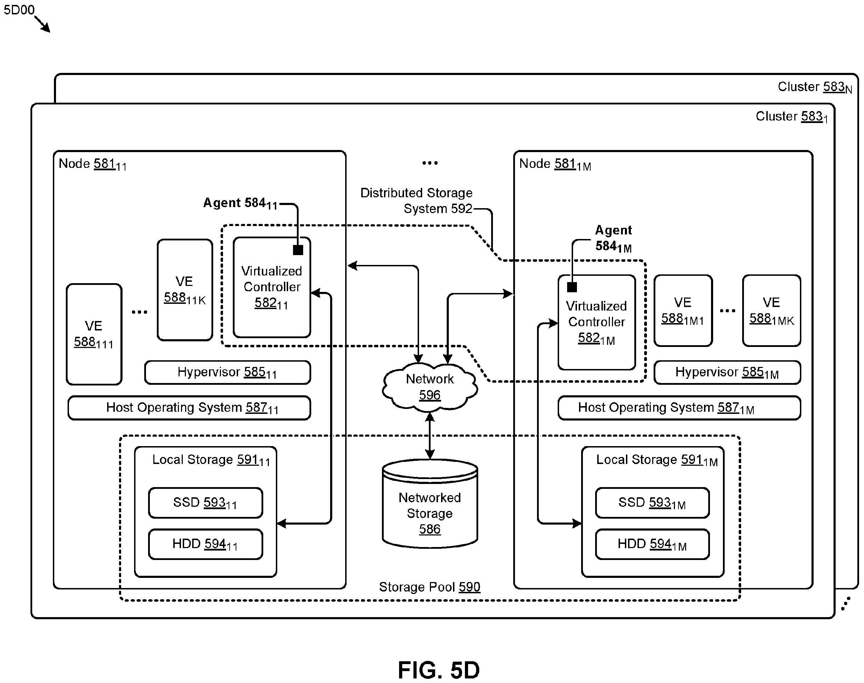

Portions of any of the foregoing techniques can be partitioned into one or more modules and instanced within, or as, or in conjunction with, a virtualized controller in a virtual computing environment. For example, any one or more of the foregoing user interfaces can be situated in a virtualization system environment. Some example virtualization system components that are situated within various virtual computing environment configurations are shown and discussed as pertains to FIG. 5A, FIG. 5B, FIG. 5C, and FIG. 5D.

FIG. 5A depicts a virtualized controller component of virtualization system as implemented in the shown virtual machine architecture 5A00. The heretofore-disclosed embodiments, including variations of any virtualized controllers, can be implemented in distributed systems where a plurality of networked-connected devices communicate and coordinate actions using inter-component messaging.

As used in these embodiments, a virtualized controller is a collection of software instructions that serve to abstract details of underlying hardware or software components from one or more higher-level processing entities. A virtualized controller can be implemented as a virtual machine, as an executable container (e.g., within a containerized component that runs in a Kubernetes cluster environment), or within a layer (e.g., such as hypervisor layer 106). Furthermore, as used in these embodiments, distributed systems are collections of interconnected components that are designed for, or dedicated to, storage operations as well as being designed for, or dedicated to, computing and/or networking operations.

Interconnected components in a distributed system can operate cooperatively to achieve a particular objective such as to provide high-performance computing, high-performance networking capabilities, and/or high-performance storage and/or high-capacity storage capabilities. For example, a first set of components of a distributed computing system can coordinate to efficiently use a set of computational or compute resources, while a second set of components of the same distributed computing system can coordinate to efficiently use the same or a different set of data storage facilities.

A hyperconverged system coordinates the efficient use of compute and storage resources by and between the components of the distributed system. Adding a hyperconverged unit to a hyperconverged system expands the system in multiple dimensions. As an example, adding a hyperconverged unit to a hyperconverged system can expand the system in the dimension of storage capacity while concurrently expanding the system in the dimension of computing capacity and also in the dimension of networking bandwidth. Components of any of the foregoing distributed systems can comprise physically and/or logically distributed autonomous entities.

Physical and/or logical collections of such autonomous entities can sometimes be referred to as nodes. In some hyperconverged systems, computing and storage resources can be integrated into a unit of a node. Multiple nodes can be interrelated into an array of nodes, which nodes can be grouped into physical groupings (e.g., arrays) and/or into logical groupings or topologies of nodes (e.g., spoke-and-wheel topologies, rings, etc.). Some hyperconverged systems implement certain aspects of virtualization. For example, in a hypervisor-assisted virtualization environment, certain of the autonomous entities of a distributed system can be implemented as virtual machines. As another example, in some virtualization environments, autonomous entities of a distributed system can be implemented as executable containers. In some systems and/or environments, hypervisor-assisted virtualization techniques and operating system (OS) virtualization techniques are combined.

As shown, virtual machine architecture 5A00 comprises a collection of interconnected components suitable for implementing embodiments of the present disclosure and/or for use in the herein-described environments. Moreover, virtual machine architecture 5A00 includes a controller virtual machine instance 530 in configuration 551₁ that is further described below as pertaining to implementation of such a controller virtual machine instance 530. Configuration 551₁ supports virtual machine instances that are deployed as user virtual machines, or controller virtual machines or both. Such virtual machines interface with a hypervisor layer (as shown). Some virtual machines are configured to process storage inputs or outputs (I/O or IO) as received from any or every source within the computing platform. An example implementation of such a virtual machine that processes storage I/O is depicted as 530.

In this and other configurations, a controller virtual machine instance receives block I/O storage requests as network file system (NFS) requests in the form of NFS requests 502, and/or internet small computer system interface (iSCSI) block IO requests in the form of iSCSI requests 503, and/or Samba file system (SMB) requests in the form of SMB requests 504. The controller virtual machine (CVM) instance publishes and responds to an internet protocol (IP) address (e.g., CVM IP address 510). Various forms of input and output can be handled by one or more IO control (IOCTL) handler functions (e.g., IOCTL handler functions 508) that interface to other functions such as data IO manager functions 514 and/or metadata manager functions 522. As shown, the data IO manager functions can include communication with virtual disk configuration manager 512 and/or can include direct or indirect communication with any of various block IO functions (e.g., NFS 532, iSCSI 533, SMB 534, etc.).

In addition to block IO functions, configuration 551₁ supports input or output (IO) of any form (e.g., block IO, streaming IO) and/or packet-based IO such as hypertext transport protocol (HTTP) traffic, etc., through either or both of a user interface (UI) handler such as UI IO handler 540 and/or through any of a range of application programming interfaces (APIs), possibly through API IO manager 545.

Communications link 515 can be configured to transmit (e.g., send, receive, signal, etc.) any type of communications packets comprising any organization of data items. The data items can comprise a payload data, a destination address (e.g., a destination IP address) and a source address (e.g., a source IP address), and can include various packet processing techniques (e.g., tunneling), encodings (e.g., encryption), and/or formatting of bit fields into fixed-length blocks or into variable length fields used to populate the payload. In some cases, packet characteristics include a version identifier, a packet or payload length, a traffic class, a flow label, etc. In some cases, the payload comprises a data structure that is encoded and/or formatted to fit into byte or word boundaries of the packet.

In some embodiments, hard-wired circuitry may be used in place of, or in combination with, software instructions to implement aspects of the disclosure. Thus, embodiments of the disclosure are not limited to any specific combination of hardware circuitry and/or software. In embodiments, the term "logic" shall mean any combination of software or hardware that is used to implement all or part of the disclosure.

The term "computer readable medium" or "computer usable medium" as used herein refers to any medium that participates in providing instructions to a data processor for execution. Such a medium may take many forms including, but not limited to, non-volatile media and volatile media. Non-volatile media includes any non-volatile storage medium, for example, solid state storage devices (SSDs) or optical or magnetic disks such as hard disk drives (HDDs) or hybrid disk drives, or random access persistent memories (RAPMs) or optical or magnetic media drives such as paper tape or magnetic tape drives. Volatile media includes dynamic memory such as random access memory. As shown, the detail of controller virtual machine instance 530 includes content cache manager facility 516 that accesses storage locations, possibly including local dynamic random access memory (DRAM) (e.g., through local memory device access block 518) and/or possibly including accesses to local solid state storage (e.g., through local SSD device access block 520).

Common forms of computer readable media include any non-transitory computer readable medium, for example, floppy disk, flexible disk, hard disk, magnetic tape, or any other magnetic medium; compact disk read-only memory (CD-ROM) or any other optical medium; punch cards, paper tape, or any other physical medium with patterns of holes; or any random access memory (RAM), programmable read-only memory (PROM), erasable programmable read-only memory (EPROM), flash memory EPROM (FLASH-EPROM), or any other memory chip or cartridge. Any data can be stored, for example, in any form of data repository 531, which in turn can be formatted into any one or more storage areas, and which can comprise parameterized storage accessible by a key (e.g., a filename, a table name, a block address, an offset address, etc.). Data repository 531 can store any forms of data, and may comprise a storage area dedicated to storage of metadata pertaining to the stored forms of data. In some cases, metadata can be divided into portions. Such portions and/or cache copies can be stored in the storage data repository and/or in a local storage area (e.g., in local DRAM areas and/or in local SSD areas). Such local storage can be accessed using functions provided by local metadata storage access block 524. The data repository 531 can be configured using CVM virtual disk controller 526, which can in turn manage any number or any configuration of virtual disks.

Execution of a sequence of instructions to practice certain embodiments of the disclosure are performed by one or more instances of a software instruction processor, or a processing element such as a central processing unit (CPU) or data processor or graphics processing unit (GPU), or such as any type or instance of a processor (e.g., CPU1, CPU2, ..., CPUN). According to certain embodiments of the disclosure, two or more instances of configuration 551₁ can be coupled by communications link 515 (e.g., backplane, local area network, public switched telephone network, wired or wireless network, etc.) and each instance may perform respective portions of sequences of instructions as may be required to practice embodiments of the disclosure.

The shown computing platform 506 is interconnected to the Internet 548 through one or more network interface ports (e.g., network interface port 523₁ and network interface port 523₂). Configuration 551₁ can be addressed through one or more network interface ports using an IP address. Any operational element within computing platform 506 can perform sending and receiving operations using any of a range of network protocols, possibly including network protocols that send and receive packets (e.g., network protocol packet 521₁ and network protocol packet 521₂).

Computing platform 506 may transmit and receive messages that can be composed of configuration data and/or any other forms of data and/or instructions organized into a data structure (e.g., communications packets). In some cases, the data structure includes program instructions (e.g., application code) communicated through the Internet 548 and/or through any one or more instances of communications link 515. Received program instructions may be processed and/or executed by a CPU as it is received and/or program instructions may be stored in any volatile or non-volatile storage for later execution. Program instructions can be transmitted via an upload (e.g., an upload from an access device over the Internet 548 to computing platform 506). Further, program instructions and/or the results of executing program instructions can be delivered to a particular user via a download (e.g., a download from computing platform 506 over the Internet 548 to an access device).

Configuration 551₁ is merely one sample configuration. Other configurations or partitions can include further data processors, and/or multiple communications interfaces, and/or multiple storage devices, etc. within a partition. For example, a partition can bound a multi-core processor (e.g., possibly including embedded or collocated memory), or a partition can bound a computing cluster having a plurality of computing elements, any of which computing elements are connected directly or indirectly to a communications link. A first partition can be configured to communicate to a second partition. A particular first partition and a particular second partition can be congruent (e.g., in a processing element array) or can be different (e.g., comprising disjoint sets of components).

A cluster is often embodied as a collection of computing nodes that can communicate between each other through a local area network (LAN) and/or through a virtual LAN (VLAN) and/or over a backplane. Some clusters are characterized by assignment of a particular set of the aforementioned computing nodes to access a shared storage facility that is also configured to communicate over the local area network or backplane. In many cases, the physical bounds of a cluster are defined by a mechanical structure such as a cabinet or such as a chassis or rack that hosts a finite number of mounted-in computing units. A computing unit in a rack can take on a role as a server, or as a storage unit, or as a networking unit, or any combination therefrom. In some cases, a unit in a rack is dedicated to provisioning of power to other units. In some cases, a unit in a rack is dedicated to environmental conditioning functions such as filtering and movement of air through the rack and/or temperature control for the rack. Racks can be combined to form larger clusters. For example, the LAN of a first rack having a quantity of 32 computing nodes can be interfaced with the LAN of a second rack having 16 nodes to form a two-rack cluster of 48 nodes. The former two LANs can be configured as subnets, or can be configured as one VLAN. Multiple clusters can communicate between one module to another over a WAN (e.g., when geographically distal) or a LAN (e.g., when geographically proximal).

As used herein, a module can be implemented using any mix of any portions of memory and any extent of hard-wired circuitry including hard-wired circuitry embodied as a data processor. Some embodiments of a module include one or more special-purpose hardware components (e.g., power control, logic, sensors, transducers, etc.). A data processor can be organized to execute a processing entity that is configured to execute as a single process or configured to execute using multiple concurrent processes to perform work. A processing entity can be hardware-based (e.g., involving one or more cores) or software-based, and/or can be formed using a combination of hardware and software that implements logic, and/or can carry out computations and/or processing steps using one or more processes and/or one or more tasks and/or one or more threads or any combination thereof.

Some embodiments of a module include instructions that are stored in a memory for execution so as to facilitate operational and/or performance characteristics pertaining to zero-code administration of stateless or stateful containerized data management workloads. In some embodiments, a module may include one or more state machines and/or combinational logic used to implement or facilitate the operational and/or performance characteristics pertaining to zero-code administration of stateless or stateful containerized data management workloads.

Various implementations of the data repository comprise storage media organized to hold a series of records or files such that individual records or files are accessed using a name or key (e.g., a primary key or a combination of keys and/or query clauses). Such files or records can be organized into one or more data structures (e.g., data structures used to implement or facilitate aspects of zero-code administration of stateless or stateful containerized data management workloads). Such files or records can be brought into and/or stored in volatile or non-volatile memory. More specifically, the occurrence and organization of the foregoing files, records, and data structures improve the way that the computer stores and retrieves data in memory, for example, to improve the way data is accessed when the computer is performing operations pertaining to zero-code administration of stateless or stateful containerized data management workloads, and/or for improving the way data is manipulated when performing computerized operations pertaining to zero-code formation of clusters with zero-code ongoing administration.

Further details regarding general approaches to managing data repositories are described in U.S. Patent No. 8,601,473.

Further details regarding general approaches to managing and maintaining data in data repositories are described in U.S. Patent No. 8,549,518.

FIG. 5B depicts a virtualized controller implemented by containerized architecture 5B00. The containerized architecture comprises a collection of interconnected components suitable for implementing embodiments of the present disclosure and/or for use in the herein-described environments. Moreover, the shown containerized architecture 5B00 includes an executable container instance 550 in configuration 551₂ that is further described below as pertaining to executable container instance 550. Configuration 551₂ includes an operating system layer (the shown OS layer 535) that performs addressing functions such as providing access to external requestors (e.g., user virtual machines or other processes) via an IP address 559 (e.g., "P.Q.R.S", as shown). Providing access to external requestors can include implementing all or portions of a protocol specification, possibly including the hypertext transport protocol (HTTP or "http:") and/or possibly handling port-specific functions. In this and other embodiments, external requestors (e.g., user virtual machines or other processes) rely on the aforementioned addressing functions to access a virtualized controller for performing all data storage functions. Furthermore, when data input or output requests are received from a requestor running on a first node are received at the virtualized controller on that first node, then in the event that the requested data is located on a second node, the virtualized controller on the first node accesses the requested data by forwarding the request to the virtualized controller running at the second node. In some cases, a particular input or output request might be forwarded again (e.g., an additional or Nth time) to further nodes. As such, when responding to an input or output request, a first virtualized controller on the first node might communicate with a second virtualized controller on the second node, which second node has access to particular storage devices on the second node or, the virtualized controller on the first node may communicate directly with storage devices on the second node.

An operating system layer (e.g., the shown OS layer 535) can perform port forwarding to any executable container (e.g., executable container instance 550). An executable container instance can be executed by a processor. Runnable portions of an executable container instance sometimes derive from an executable container image, which in turn might include all, or portions of any of, a Java archive repository (JAR) and/or its contents, and/or a script or scripts and/or a directory of scripts, and/or a virtual machine configuration, and may include any dependencies therefrom. In some cases, a configuration within an executable container might include an image comprising a minimum set of runnable code. Contents of larger libraries and/or code or data that would not be accessed during runtime of the executable container instance can be omitted from the larger library to form a smaller library composed of only the code or data that would be accessed during runtime of the executable container instance. In some cases, start-up time for an executable container instance can be much faster than start-up time for a virtual machine instance, at least inasmuch as the executable container image might be much smaller than a corresponding virtual machine instance. Furthermore, start-up time for an executable container instance can be much faster than start-up time for a virtual machine instance, at least inasmuch as the executable container image might have many fewer code and/or data initialization steps to perform than a respective virtual machine instance.

An executable container instance can serve as an instance of an application container or as a controller executable container. Any executable container of any sort can be rooted in a directory system and can be configured to be accessed by file system commands (e.g., "ls", "dir", etc.). The executable container might optionally include operating system components 578, however such a separate set of operating system components need not be provided. As an alternative, an executable container can include runnable instance 558, which is built (e.g., through compilation and linking, or just-in-time compilation, etc.) to include any or all of any or all library entries and/or operating system (OS) functions, and/or OS-like functions as may be needed for execution of the runnable instance. In some cases, a runnable instance can be built with a virtual disk configuration manager, any of a variety of data IO management functions, etc. In some cases, a runnable instance includes code for, and access to, container virtual disk controller 576. Such a container virtual disk controller can perform any of the functions that the aforementioned CVM virtual disk controller 526 can perform, yet such a container virtual disk controller does not rely on a hypervisor or any particular host operating system so as to perform its range of functions.

In some environments, multiple executable containers can be collocated and/or can share one or more contexts. For example, multiple executable containers that share access to a virtual disk can be assembled into a pod 517 (e.g., a Kubernetes pod). Pods provide sharing mechanisms (e.g., when multiple executable containers are amalgamated into the scope of a pod) as well as isolation mechanisms (e.g., such that the namespace scope of one pod does not share the namespace scope of another pod). In various implementations a pod represents a set of running or runnable processes. A pod can be deployed as the lowest level executable unit of a containerized application. As used herein, a pod that is instanced within a node can be addressed by a local IP address.

FIG. 5C depicts a virtualized controller implemented by a daemon-assisted containerized architecture 5C00. The containerized architecture comprises a collection of interconnected components suitable for implementing embodiments of the present disclosure and/or for use in the herein-described environments. Moreover, the shown daemon-assisted containerized architecture includes a user executable container instance 570 in configuration 551₃ that is further described below as pertaining to user executable container instance 570. Configuration 551₃ includes a daemon layer 537 that performs certain functions of an operating system.

User executable container instance 570 comprises any number of user containerized functions (e.g., user containerized function1 560₁, user containerized function2 560₂, ..., user containerized functionN 560₃). Such user containerized functions can execute autonomously or can be interfaced with or wrapped in a runnable object to create a runnable instance (e.g., runnable instance 558). In some cases, the shown operating system components 578 comprise portions of an operating system, which portions are interfaced with or included in the runnable instance and/or any user containerized functions. In this embodiment of a daemon-assisted containerized architecture, the computing platform 506 might or might not host operating system components other than operating system components 578. More specifically, the shown daemon might or might not host operating system components other than operating system components 578 of user executable container instance 570.

The virtual machine architecture 5A00 of FIG. 5A and/or the containerized architecture 5B00 of FIG. 5B and/or the daemon-assisted containerized architecture 5C00 of FIG. 5C can be used in any combination to implement a distributed platform that contains multiple servers and/or nodes that manage multiple tiers of storage where the tiers of storage might be formed using the shown data repository 531 and/or any forms of network accessible storage. As such, the multiple tiers of storage may include storage that is accessible over communications link 515. Such network accessible storage may include cloud storage or networked storage (NAS) and/or may include all or portions of a storage area network (SAN). Unlike prior approaches, the presently-discussed embodiments permit local storage that is within or directly attached to the server or node to be managed as part of a storage pool. Such local storage can include any combinations of the aforementioned SSDs and/or HDDs and/or RAPMs and/or hybrid disk drives. The address spaces of a plurality of storage devices, including both local storage (e.g., using node-internal storage devices) and any forms of network-accessible storage, are collected to form a storage pool having a contiguous address space.

Significant performance advantages can be gained by allowing the virtualization system to access and utilize local (e.g., node-internal) storage. This is because I/O performance is typically much faster when performing access to local storage as compared to performing access to networked storage or cloud storage. This faster performance for locally attached storage can be increased even further by using certain types of optimized local storage devices such as SSDs or RAPMs, or hybrid HDDs, or other types of high-performance storage devices.

In example embodiments, each storage controller exports one or more block devices or NFS or iSCSI targets that appear as disks to user virtual machines or user executable containers. These disks are virtual since they are implemented by the software running inside the storage controllers. Thus, to the user virtual machines or user executable containers, the storage controllers appear to be exporting a clustered storage appliance that contains some disks. User data (including operating system components) in the user virtual machines resides on these virtual disks.

Any one or more of the aforementioned virtual disks (or "vDisks") can be structured from any one or more of the storage devices in the storage pool. As used herein, the term "vDisk" refers to a storage abstraction that is exposed by a controller virtual machine or container to be used by another virtual machine or container. In some embodiments, the vDisk is exposed by operation of a storage protocol such as iSCSI or NFS or SMB. In some embodiments, a vDisk is mountable. In some embodiments, a vDisk is mounted as a virtual storage device.

In example embodiments, some or all of the servers or nodes run virtualization software. Such virtualization software might include a hypervisor or corresponding computer modules that manages the interactions between the underlying hardware and user virtual machines or containers that run client software.

Distinct from user virtual machines or user executable containers, a special controller virtual machine or a special controller executable container can be used to manage certain storage and I/O activities. Such a special controller virtual machine is referred to as a "CVM", or as a controller executable container, or as a service virtual machine (SVM), or as a service executable container, or as a storage controller. In some embodiments, multiple storage controllers are hosted by multiple nodes. Such storage controllers coordinate within a computing system to form a computing cluster.

The storage controllers are not formed as part of specific implementations of hypervisors. Instead, the storage controllers run above hypervisors on the various nodes and work together to form a distributed system that manages all of the storage resources, including the locally attached storage, the networked storage, and the cloud storage. In example embodiments, the storage controllers run as special virtual machines-above the hypervisors- thus, the approach of using such special virtual machines can be used and implemented within any virtual machine architecture. Furthermore, the storage controllers can be used in conjunction with any hypervisor from any virtualization vendor and/or implemented using any combinations or variations of the aforementioned executable containers in conjunction with any host operating system components.

FIG. 5D depicts a distributed virtualization system in a multi-cluster environment 5D00. The shown distributed virtualization system is configured to be used to implement the herein disclosed techniques. Specifically, the distributed virtualization system of FIG. 5D comprises multiple clusters (e.g., cluster 583₁, ..., cluster 583_{N}) comprising multiple nodes that have multiple tiers of storage in a storage pool. Representative nodes (e.g., node 581₁₁, ..., node 581_{1M}) and storage pool 590 associated with cluster 583₁ are shown. Each node can be associated with one server, multiple servers, or portions of a server. The nodes can be associated (e.g., logically and/or physically) with the clusters. As shown, the multiple tiers of storage include storage that is accessible through a network 596, such as a networked storage 586 (e.g., a storage area network or SAN, network attached storage or NAS, etc.). The multiple tiers of storage further include instances of local storage (e.g., local storage 591₁₁, ..., local storage 591_{1M}). For example, the local storage can be within or directly attached to a server and/or appliance associated with the nodes. Such local storage can include solid state drives (SSD 593₁₁, ..., SSD 593_{1M}), hard disk drives (HDD 594₁₁, ..., HDD 594_{1M}), and/or other storage devices.

As shown, any of the nodes of the distributed virtualization system can implement one or more user virtualized entities (VEs) such as the virtualized entity (VE) instances shown as VE 588₁₁₁, ..., VE 588_{11K}, ..., VE 588_{1M1}, ..., VE 588_{1MK}, and/or a distributed virtualization system can implement one or more virtualized entities that may be embodied as a virtual machines (VM) and/or as an executable container. The VEs can be characterized as software-based computing "machines" implemented in a container-based or hypervisor-assisted virtualization environment that emulates underlying hardware resources (e.g., CPU, memory, etc.) of the nodes. For example, multiple VMs can operate on one physical machine (e.g., node host computer) running a single host operating system (e.g., host operating system 587₁₁, ..., host operating system 587_{1M}), while the VMs run multiple applications on various respective guest operating systems. Such flexibility can be facilitated at least in part by a hypervisor (e.g., hypervisor instance 585₁₁, ..., hypervisor instance 585_{1M}), which hypervisor instances are logically located between the various guest operating systems of the VMs and the host operating system of the physical infrastructure (e.g., node).

As an alternative, executable containers may be implemented at the nodes in an operating system-based virtualization environment or in a containerized virtualization environment. The executable containers comprise groups of processes and/or may use resources (e.g., memory, CPU, disk, etc.) that are isolated from the node host computer and other containers. Such executable containers directly interface with the kernel of the host operating system (e.g., host operating system 587₁₁, ..., host operating system 587_{1M}) without, in most cases, a hypervisor layer. This lightweight implementation can facilitate efficient distribution of certain software components, such as applications or services (e.g., micro-services). Any node of a distributed virtualization system can implement both a hypervisor-assisted virtualization environment and a container virtualization environment for various purposes. Also, any node of a distributed virtualization system can implement any one or more types of the foregoing virtualized controllers so as to facilitate access to storage pool 590 by the VMs and/or the executable containers.

Multiple instances of such virtualized controllers can coordinate within a cluster to form the distributed storage system 592 which can, among other operations, manage the storage pool 590. This architecture further facilitates efficient scaling in multiple dimensions (e.g., in a dimension of computing power, in a dimension of storage space, in a dimension of network bandwidth, etc.).

A particularly-configured instance of a virtual machine at a given node can be used as a virtualized controller in a hypervisor-assisted virtualization environment to manage storage and I/O (input/output or IO) activities of any number or form of virtualized entities. For example, the virtualized entities at node 581₁₁ can interface with a controller virtual machine (e.g., virtualized controller 582₁₁) through hypervisor instance 585₁₁ to access data of storage pool 590. In such cases, the controller virtual machine is not formed as part of specific implementations of a given hypervisor. Instead, the controller virtual machine can run as a virtual machine above the hypervisor at the various node host computers. When the controller virtual machines run above the hypervisors, varying virtual machine architectures and/or hypervisors can operate with the distributed storage system 592. For example, a hypervisor at one node in the distributed storage system 592 might correspond to software from a first vendor, and a hypervisor at another node in the distributed storage system 592 might correspond to a second software vendor. As another virtualized controller implementation example, executable containers can be used to implement a virtualized controller (e.g., virtualized controller 582_{1M}) in an operating system virtualization environment at a given node. In this case, for example, the virtualized entities at node 581_{1M} can access the storage pool 590 by interfacing with a controller container (e.g., virtualized controller 582_{1M}) through hypervisor instance 585_{1M} and/or the kernel of host operating system 587_{1M}.

In certain embodiments, one or more instances of an agent can be implemented in the distributed storage system 592 to facilitate the herein disclosed techniques. Specifically, agent 584₁₁ can be implemented in the virtualized controller 582₁₁, and agent 584_{1M} can be implemented in the virtualized controller 582_{1M}. Such instances of the virtualized controller can be implemented in any node in any cluster. Actions taken by one or more instances of the virtualized controller can apply to a node (or between nodes), and/or to a cluster (or between clusters), and/or between any resources or subsystems accessible by the virtualized controller or their agents.

Solutions attendant to zero-code formation of clusters with zero-code ongoing administration can be brought to bear through implementation of any one or more of the foregoing techniques. Moreover, any aspect or aspects of formation and ongoing administration of clusters of containerized applications has become impractically burdensome can be implemented in the context of the foregoing environments.

In the foregoing specification, the disclosure has been described with reference to specific embodiments thereof. It will, however, be evident that various modifications and changes may be made thereto without departing from the broader spirit and scope of the disclosure. For example, the above-described process flows are described with reference to a particular ordering of process actions. However, the ordering of many of the described process actions may be changed without affecting the scope or operation of the disclosure. The specification and drawings are to be regarded in an illustrative sense rather than in a restrictive sense.

## Claims

1. A system comprising:
a Kubernetes cluster deployment module configured to synthesize one or more operations to achieve a declarative no-code configuration of a desired state of a data management function;
a cluster creation module that implements the one or more operations to create or configure a Kubernetes cluster corresponding to the declarative no-code configuration of the desired state of the data management function;
a management module that implements at least some aspects of governance and observability over the Kubernetes cluster so that the desired state of the data management function is maintained over time or changing conditions; and
a storage infrastructure on which the Kubernetes cluster is implemented, wherein the storage infrastructure is instructed to implement the desired state of the data management function.

2. The system of claim 1, further comprising at least one of:
a matching module that matches resource demands to one or more pools of resources; and/or
an optimizer module receives feasible solutions from a matching module and outputs at least one optimized solution based at least in part on one or more constraints.

3. The system of claim 1 or claim 2, further comprising at least one of:
an infrastructure discovery module that receives a data management scenario and produces one or more resource pools; and/or
an onboarding module that receives an optimized solution and produces at least one of, executable agent code, or one or more onboarding operations, or agent instructions.

4. The system of any of claims 1-3, further comprising at least one of:
a policy execution observation module that interacts with Kubernetes cluster during execution of the data management function; and/or
a policy synthesis engine that receives data protection needs and produces a specification or rule that corresponds to a desired behavior of the data management function.

5. A method comprising:
invoking a Kubernetes cluster deployment module configured to synthesize one or more operations to achieve a declarative no-code configuration of a desired state of a data management function;
invoking a cluster creation module that implements the one or more operations to create or configure a Kubernetes cluster corresponding to the declarative no-code configuration of the desired state of the data management function;
invoking a management module that implements at least some aspects of governance and observability over the Kubernetes cluster so that the desired state of the data management function is maintained over time or changing conditions; and
configuring a storage infrastructure on which the Kubernetes cluster is implemented, wherein the storage infrastructure is instructed to implement the desired state of the data management function.

6. The method of claim 5, further comprising carrying out a matching operation that matches resource demands to one or more pools of resources.

7. The method of claim 5 or claim 6, further comprising carrying out optimizing operations by receiving feasible solutions from a matching operation and outputting at least one optimized solution based at least in part on one or more constraints.

8. The method of any of claims 5-7, further comprising carrying out an infrastructure discovery operation that processes a data management scenario to produce one or more resource pools.

9. The method of c any of claims 5-8, further comprising carrying out onboarding operations by receiving an optimized solution and invoking at least one of, executable agent code, or one or more further onboarding operations.

10. The method of any of claims 5-9, further comprising carrying out a policy execution observation operation that interacts with a Kubernetes cluster during execution of the data management function.

11. The method of any of claims 5-10, further comprising carrying out a policy synthesis operation that receives data protection needs and produces a specification or rule that corresponds to a desired behavior of the data management function.

12. The method of any of claims 5-11, wherein at least a portion of the storage infrastructure is part of an HCI deployment.

13. The method of any of claims 5-11, wherein at least a portion of the storage infrastructure is part of a Kubernetes cluster deployment.

14. A transitory or non-transitory computer readable medium having stored thereon one or more sequences of instructions which, when stored in memory and executed by one or more processors, cause the one or more processors to perform acts comprising the acts recited in any of claims 5-13.

15. A system comprising a storage medium having stored thereon one or more sequences of instructions and one or more processors, wherein the one or more processors that executes the sequence of instructions to cause the processor to perform acts comprising any of the methods of claims 5-13.
